# EUROPEAN PATENT SPECIFICATION

(11) **EP 3 343 944 B1**
(45) Date of publication and mention of the grant of the patent: **28.06.2023**
(21) Application number: 16841475.3
(22) Date of filing: 15.08.2016
(51) Int. Cl.: H04R 1/02, B60R 11/02

(54) **SPEAKER SYSTEM FOR MOVING BODY**
LAUTSPRECHERSYSTEM FÜR BEWEGTKÖRPER
SYSTÈME DE HAUT-PARLEUR POUR CORPS MOBILE

(30) Priority: 28.08.2015 WO PCT/JP2015/074530; 28.08.2015 WO PCT/JP2015/074531; 28.08.2015 JP 2015169701
(43) Date of publication of application: 04.07.2018
(73) Proprietor: Pioneer Corporation, Tokyo 113-0021 (JP); Tohoku Pioneer Corporation, Tendo-shi, Yamagata 994-8585 (JP)
(72) Inventor: NEGISHI, Takayuki, Tendo-shi Yamagata 994-8585 (JP); UMETSU, Yasumi, Tendo-shi Yamagata 994-8585 (JP); NAKAMURA, Toru, Tendo-shi Yamagata 994-8585 (JP); SUZUKI, Tatsuya, Tendo-shi Yamagata 994-8585 (JP)
(74) Representative: Grünecker Patent- und Rechtsanwälte PartG mbB
(86) International application number: PCT/JP2016/073858
(87) International publication number: WO 2017/038443

(56) References cited:
- WO-A1-2014/006290
- DE-A1- 19 909 143
- JP-A- H07 267 003
- JP-U- H 042 755
- JP-U- H0 476 794
- JP-U- H04 110 100
- US-A1- 2003 183 444

## Description

### TECHNICAL FIELD

The present invention relates to a speaker system for a mobile object.

### BACKGROUND ART

From DE 199 0 9143 A1, a bass box for a sound system of a vehicle as known, which is formed in a hollow girder, e.g. in a side sill of the vehicle which extends in the bottom area of the vehicle. The volume of the side sill causes the desired amplification of the low frequency vibrations generated by a speaker, which is disposed at least partly in the hollow side sill. With openings directed to the interior of the vehicle, the low frequency sound is directed to the passengers, which will experience the desired strong basses while listening to music from the vehicle's sound system.
From JP H04 2755 U, another sound system for a vehicle body is known, where a loud speaker unit is disposed in a hollow shaped pillar of the vehicle and openings in the pillar guide the sound, generated by the loud speaker, into the interior of the vehicle.
In Japanese Unexamined Utility Model Application Publication No. H1-143595 there is conventionally proposed an on-vehicle speaker device (a speaker system for a mobile object) which is placed in an instrument panel of a vehicle and also utilizes sound emitted from the back side. In such a conventional on-vehicle speaker device, a speaker is installed in an instrument panel with its front side set at an upper surface of the instrument panel and is accommodated in a cylindrical acoustic tube. Further, the speaker device is configured so that a component of a low sound range among sounds generated at the back side of the speaker resonates in the acoustic tube and is emitted from a lower surface of the instrument panel.

### SUMMARY OF INVENTION

### Technical Problem

However, a large space which is capable of placing the acoustic tube is required in a speaker device for a mobile object disclosed in H1-143595.

Therefore, an example of the problem in the present invention is to provide a speaker system for a mobile object which achieves to save space.

### Solution to Problem

In order to solve the problem above, a vehicle body comprising a speaker system, the speaker system includes a speaker unit emitting sound from a front side toward a box-shaped space formed by the mobile object, an accommodating unit accommodating a back side of the speaker unit, and an acoustic tube having one end connected to an internal space of the accommodating unit and the other end opened in the box-shaped space, and at least a portion of the acoustic tube is formed of a first tubular member, and the first tubular member forms at least a part of a vehicle body of the mobile object.
FIG 1 is a side view illustrating a vehicle as a mobile object provided with a speaker system for a mobile object according to example 1 of the present invention.
FIG 2A is a perspective view illustrating a vehicle body configuring the vehicle in FIG 1.
FIG 2B is an exploded perspective view illustrating a pillar configuring a vehicle body.
FIG 2C is a schematic cross-sectional view of FIG 2A.
FIG.3 is a schematic front view illustrating an inside of the vehicle illustrated in FIG 1.
FIG 4A is a schematic side view illustrating an inside of the vehicle illustrated in FIG 1.
FIG 4B is a partially enlarged view of FIG 4A.
FIG 5A is a perspective view illustrating a vehicle provided with a speaker system for a mobile object according to example 2 of the present invention.
FIG 5B is a schematic side view illustrating a vehicle provided with a speaker system for a mobile object according to example 2 of the present invention.
FIG 6 is an exploded perspective view illustrating a tubular member utilized in a speaker system for a mobile object according to the other example.
FIG 7 is a schematic front view illustrating an inside of a vehicle illustrated in FIG 1 according to the other example.
FIG 8 is a side view illustrating a vehicle provided with a speaker system for a mobile object according to example 3 of the present invention.
FIG 9 is a plan view illustrating the mobile object provided with the speaker system for the mobile object.
FIG 10 is a front view illustrating a main portion of an acoustic tube of the speaker system for the mobile object.
FIG 11 is a perspective view illustrating the acoustic tube.
FIG 12 is a rear view illustrating a speaker device in a rear side of the speaker system for the mobile object.
FIG 13 is a graph showing acoustic characteristics of a speaker system for a mobile object according to a modification of the present invention.
FIG 14 is a graph showing acoustic characteristics of a speaker system for a mobile object according to the example.
FIG 15 is a plan view illustrating a mobile object provided with a speaker system for a mobile object according to a modification of the present invention.
FIG 16 is a rear view illustrating a speaker device in a rear side of the speaker system for the mobile object.
FIG 17 is a side view illustrating a mobile object provided with a speaker system for a mobile object according to example 4 of the present invention.
FIG 18 is a front view illustrating a main portion of an acoustic tube of the speaker system for the mobile object.
FIG 19 is a perspective view illustrating the main portion of the acoustic tube.
FIG20 is a perspective view illustrating a state where the mobile object is provided with the speaker system for the mobile object.
FIG21 is a graph showing frequency characteristics of an acoustic impedance of a speaker system for a mobile object according to a comparative example.
FIG22 is a graph showing frequency characteristics of an acoustic impedance of a speaker system for a mobile object according to an example.
FIG23 is a graph showing frequency characteristics of sound pressure of a speaker system for a mobile object according to an example and a comparative example.
FIG 24A and FIG 24B are perspective views illustrating a speaker system for a mobile object according to examples 1 to 3 of the present invention.
FIG 25A, FIG 25B, and FIG 25C are perspective views illustrating a speaker system for a mobile object according to modification 4 of the present invention.
FIG 26A and FIG 26B are perspective views illustrating a speaker system for a mobile object according to modification 5 of the present invention.
FIG 27 is a rear view illustrating a speaker system for a mobile object according to modification 6 of the present invention.
FIG 28A, FIG 28B, and FIG 28C are plan views illustrating a speaker system for a mobile object according to modification 7 of the present invention.
FIG 29A is a perspective view illustrating a speaker system for a mobile object according to modification 8 of the present invention.
FIG 29B is a schematic side view illustrating a speaker system for a mobile object according to modification 8 of the present invention.

### DESCRIPTION OF EMBODIMENT

A speaker system for a mobile object according to an embodiment of the present invention will be described below. The speaker system for the mobile object according to the embodiment of the present invention includes a speaker unit emitting sound from a front side toward a box-shaped space formed by the mobile object, an accommodating unit accommodating a back side of the speaker unit, and an acoustic tube having one end connected to an internal space of the accommodating unit and the other end thereof is opened in the box-shaped space.

Further, since one end of the acoustic tube is connected to the inner space of the accommodating unit (a space to accommodate the speaker unit), a component of a low sound range corresponding a length of the acoustic tube among sounds generated at the back side of the speaker unit resonates in the acoustic tube and is emitted from the other end. Note that the accommodating unit and the acoustic tube may be formed integrally.

Further, at least a part of the acoustic tube includes a first tubular member and the first tubular member includes at least a portion of a vehicle body of the mobile object. At least the portion of the acoustic tube is formed of the portion of the vehicle body of the mobile object, thereby saving space.

Further, the first tubular member may include a frame which forms the vehicle body of the mobile object. Thereby without using other members, it is possible to gain distance between the speaker unit and an opening of the other end of the acoustic tube.

Further, the frame may be formed in a tubular shape. Thus, it is possible to utilize a structure of the frame effectively, thereby saving space even more.

Further, the first tubular member may be formed of at least one member selected from a pillar, a side sill, a reinforcement, and a cross member as the vehicle body.

According to the invention, the first tubular member is formed of the pillar of the vehicle body, and the other end of the acoustic tube is placed in a location which is closer to a bottom surface surrounding the box-shaped space than to the speaker unit. Generally, when the speaker unit is placed at a location which is far from the bottom surface, the low sound does not echo easily, however, by placing the opening of the other end of the acoustic tube near the bottom surface, it becomes possible to reflect the low sound at the bottom surface.

Further, the other end of the acoustic tube may open toward an intersection part where at least two of a plurality of surfaces surrounding the box-shaped space. Here, the mobile object which is forming the box-shaped space includes a plurality of surfaces, for example, the front surface, a rear surface, a left side, a right side, the bottom surface, and an upper surface in a travelling direction of the mobile object. Thereby the sound emitted from the other end is reflected on at least two of the surfaces and echoes easily in the space of the mobile object, and it is possible to improve acoustic characteristics of a speaker for the mobile object even more.

Further, the other end of the acoustic tube may open toward a corner where at least three of the plurality of surfaces intersect. Thereby the sound emitted from the other end is reflected on the three surfaces and echoes easily in the space of the mobile object, and it is possible to improve the acoustic characteristics of the speaker for the mobile object more effectively.

Further, the acoustic tube may include a second tubular member, one end of which is connected to the first tubular member and the other end of which becomes the other end of the said acoustic tube. Thus a location of the opening of the acoustic tube being is not restricted, and may be directed to a desired location such as the intersection part.

Further, the acoustic tube may include a third tubular member, one end of which is connected to the internal space of the accommodating unit and the other end of which is connected to the first tubular member. Thus a location of the accommodating unit is not restricted, and it is possible to make the first tubular member formed of the vehicle body a portion of the acoustic tube.

Further, at least two of the speaker devices each of which includes the speaker unit, the accommodating unit, and the acoustic tube are included, and in the box-shaped space, the two speaker devices may be placed at respective corners of the front side and the rear side in the travelling direction of the mobile object, or of one side and the other side in the width direction.

Since the speaker system for the mobile object includes at least two speaker devices and each of them are placed at the two corners of the mobile object, it is possible to improve sound pressure of emitted sound from the entire speaker system for the mobile object and it is also possible to improve the acoustic characteristics even when a free space at the each corner is small. Since the low sound echoes easily at the corner, the low sound emitted from the other end of the acoustic tube echoes, thereby especially improving characteristics of the low sound range.

The speaker unit of the speaker device placed in the front side and the speaker unit of the speaker device placed in the rear side may be operated with a predetermined time difference. According to this, it is possible to obtain the good acoustic characteristics by adjusting a location of a node of a standing wave formed in the space of the mobile object by the emitted sound of the two speaker units appropriately.

The other end of the acoustic tube of the speaker device placed in the front side may open toward an intersection part in the front side where at least two of a plurality of surfaces surrounding the space intersect, the other end of the acoustic tube of the speaker device placed in the rear side may open toward an intersection part in the rear side where at least the other two of the plurality of surfaces intersect, and a wavelength of the standing wave formed by a sound wave emitted from the other end of the acoustic tube of the front side and the rear side may be the same as an interval between the intersection part in the front side and the intersection part in the rear side. Thereby, the sound wave emitted from the other end of the acoustic tube in the front and the rear is reflected on the each intersection part, and the standing wave is formed between the intersection parts. Since the standing wave including the wavelength which is the same as the interval between the intersection parts is generated, it is possible to adjust the location of the node of the standing wave as described above, and it is also possible to improve the acoustic characteristics of the sound of a relatively long wavelength (that is, the low sound). On the other hand, in a case where sound is emitted from the other end of the acoustic tube both in the front side and in the rear side without a time difference, since the node of the standing wave like this is formed in an intermediate position of the intersection parts, in a case where the mobile object includes a seat in the front side and a seat in the rear side, the node is sometimes located at a slightly rear position from a location of a head part of the seat in the front side, and the sound pressure decreases easily at the location of the head part of the seat in the front side. Therefore, displacement of the node further to the rear side by providing the predetermined time difference makes it possible to improve the characteristics of the low sound range for a passenger seating in the front seat.

Further, since the other end of the tubular member opens toward the intersection part, the low sound emitted from the other end is reflected on at least two of the surfaces and echoes easily in the space of the mobile object and it is possible to improve the characteristics of the low sound range of the speaker system for the mobile object even more. Note that it is more preferable that the intersection part in the front side is a part where the front surface and at least one of the other surfaces intersect, and that the intersection part in the rear side is a part where the rear surface and at least one of the other surfaces intersect.

It is preferable that the acoustic tube of the speaker device placed in the rear side and the one side extends from the accommodating unit toward the other side, and that the acoustic tube of the speaker device placed in the rear side and the other side extends from the accommodating unit to the one side. According to this, it is possible to make the acoustic tube long and to make the sound of the relatively long wavelength resonate in the acoustic tube. Therefore, it is possible to improve the acoustic characteristics of the low sound more.

The speaker unit placed in the front side may be provided on un upper surface of the instrument panel of the mobile object, and the other end of the acoustic tube in the front side may open toward the corner where the front surface, the lower surface, and the side of the plurality of surfaces in the travelling direction of the mobile object intersect at the lower part of the instrument panel. Thus, the speaker unit is provided in the instrument panel, and the sound is emitted from the front side on the upper surface of the instrument panel, thereby making the emitted sound reach the passenger more easily. Further, since at the lower part of the instrument panel, the other end of the acoustic tube opens toward the corner where the front surface, the lower surface, and the side of the mobile object intersect, the low sound emitted from the other end is reflected on three surfaces and echoes easily in the space of the mobile object, and it is possible to improve the acoustic characteristics of the sound pressure of the low sound range or the like of the speaker system for the mobile object even more.

The speaker unit placed in the rear side may be provided to emit the sound toward the upper surface of the mobile object, and the other end of the acoustic tube of the rear side may open toward the corner where the rear surface, the upper surface, and the side of the plurality of surfaces in the travelling direction of the mobile object intersect. Thereby, it is possible to echo the sound emitted from the front side of the speaker and the other end of the acoustic tube on the upper surface or at the corner, and it is possible to improve the acoustic characteristics even more.

Further, the mobile object according to the present embodiment further includes the aforementioned speaker system for the mobile object. According to the mobile object like this, by placing at least two of the speaker devices at two corners in the front and the rear of the mobile object or one side or the other side in the width direction and letting the sound emitted, it is possible to improve the acoustic characteristics in the box-shaped space.

Further, at least one closed tubular member having the one end connected to the inner space of the accommodating unit and also the other end closed may be included.

Since the one end of the closed tubular member is connected to the accommodating unit accommodating a back side of the speaker unit, not only a capacity of the accommodating unit, but also a capacity of the closed tubular member can be utilized as a capacity in the back side of the speaker unit, and it is possible to downsize the accommodating unit while securing the capacity in the back side of the speaker unit. At this time, since the closed tubular member has a high flexibility in installation, it is possible to provide the closed tubular member in an appropriate free space on the mobile object. Therefore, by installing the closed tubular member, the speaker system for the mobile object may be easily provided on the mobile object while securing the capacity in the back side of the speaker unit.

Further, since the one end of the acoustic tube is connected to the inner space of the accommodating unit (a space to accommodate the speaker unit), the component of the low sound range corresponding to the length of the acoustic tube among the sounds generated in the back side of the speaker unit resonates in the acoustic tube and is emitted from the other end.

It is preferable that the acoustic tube is longer than the closed tubular member. According to this, frequencies of fundamental vibration in the acoustic tube and the closed tubular member do not completely match, and it is possible to inhibit the sound pressure of the sound emitted from the other end of the acoustic tube from getting too high or too low at a specific frequency.

It is preferable that lengths of the acoustic tube and the closed tubular member are set so that the frequency of the fundamental vibration in the closed tubular member becomes 0.75 times bigger than, and 1.25 times smaller than that of the fundamental vibration in the acoustic tube. When the sound is emitted only against the acoustic tube, the sound pressure becomes low when the frequency is 1.5 times the fundamental vibration and 2.5 times the fundamental vibration, and along with that, the sound pressure becomes high at the double frequency. On the other hand, when the sound is emitted only against the closed tubular member, the sound pressure becomes high when the frequency is the same as, and three times the frequency of the fundamental vibration and along with that, the sound pressure becomes low when the frequency is double the frequency of the fundamental vibration. Since double frequency of the vibration of the closed tubular member is 1.5 times bigger than and 2.5 times smaller than the frequency of the fundamental vibration in the open tubular member, on this frequency range, the frequency when the sound pressure becomes minimal in the acoustic tube and the frequency when the sound pressure becomes minimal in the closed tubular member don't match, and thus it is possible to inhibit the sound pressure of the sound emitted from the other end of the acoustic tube from getting too low at a specific frequency.

It is preferable that the length of the acoustic tube and that of the closed tubular member are set so that the frequency of the fundamental vibration in the acoustic tube and the frequency of the fundamental vibration in the closed tubular member become the same. In the acoustic tube, the sound pressure becomes maximal in the double vibration, and in the closed tubular member, the sound pressure becomes maximal in the fundamental vibration and triple vibration, and the sound pressure becomes minimal at double frequency of the fundamental vibration. Therefore, the frequency at which the sound pressure becomes maximal in the acoustic tube, and the frequency at which the sound pressure becomes minimal in the closed tubular member become the same, and thus it is possible to inhibit the sound pressure of the sound emitted from the other end of the acoustic tube from changing largely at before and after this frequency.

The accommodating unit and the acoustic tube or the closed tubular member may be formed integrally, or the acoustic tube, the accommodating unit, and the closed tubular member may be formed integrally into a single tubular shape. According to this, it is possible to reduce the number of parts.

It is preferable that the other end of the acoustic tube opens toward the intersection part where at least two of the plurality of surfaces surrounding the box-shaped space intersect. Here, the mobile object forming the box-shaped space has plural surfaces, for example, in the travelling direction of the mobile object, the front surface, the rear surface, the left side, the right side, the lower surface (the bottom surface), and the upper surface (the top surface) are included. Since the other end of the acoustic tube opens toward the intersection part where at least two of the plurality of surfaces surrounding the space of the mobile object intersect, the low sound emitted from the other end is reflected on at least two of the surfaces and echoes easily in the space of the mobile object, and it is possible to improve the acoustic characteristics of the sound pressure or the like of the low sound range of the speaker system for the mobile object.

It is preferable that the speaker unit is installed in the instrument panel to emit the sound from the front side on the upper surface of the instrument panel of the mobile object, the acoustic tube extends downward from the accommodating unit, and that at least a part of the closed tubular member is provided in the pillar of the mobile object. Thereby the speaker unit is provided in the instrument panel and emits the sound from the front side on the upper surface of the instrument panel, and it is possible to make the emitted sound reach the passenger more easily. Further, at least a part of the closed tubular member is provided in the pillar, thereby utilizing the free space in the mobile object effectively.

Further, the mobile object according to the present embodiment includes the aforementioned speaker system for the mobile object. According to the mobile object like this, the speaker system for the mobile object has a high flexibility in installation, thereby securing a space to accommodate other members or the like easily.

### EXAMPLE

An embodiment of the present invention will specifically be described below. Note that in Example 2, the same reference signs are allocated to the same constituent members as those of Example 1 and to constituent members having the same functions as those of Example 1, and explanation thereof will be omitted.

### Example 1

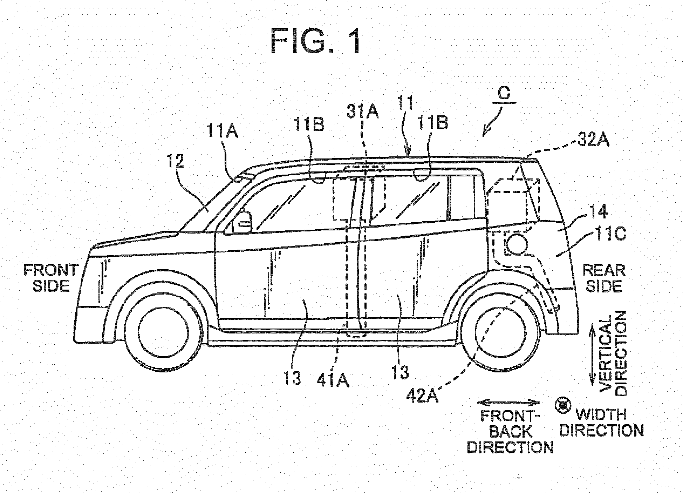

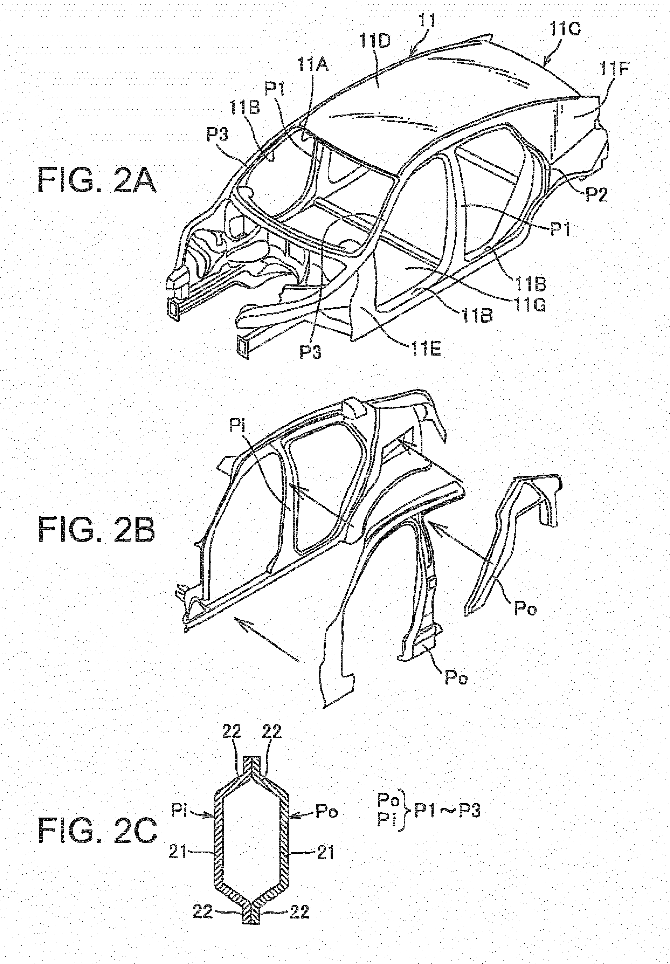

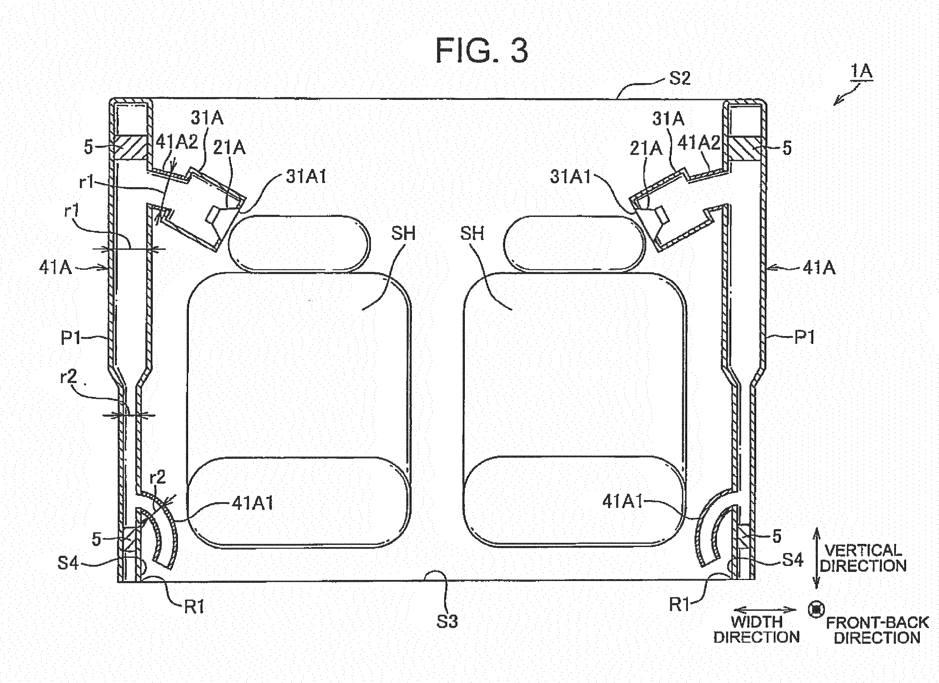

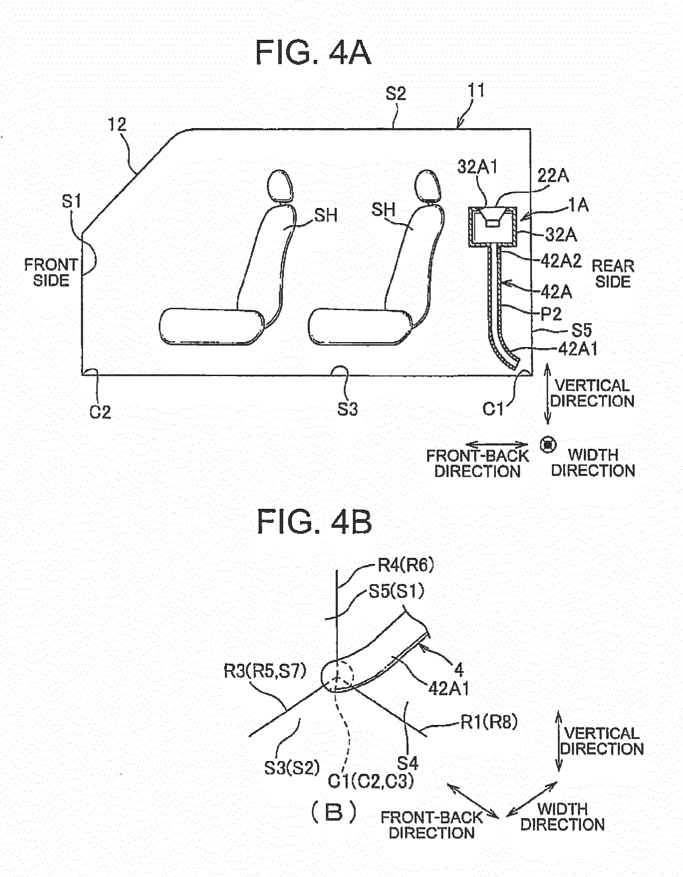

FIG 1 is a side view illustrating a vehicle C as a mobile object provided with a speaker system for a mobile object 1A according to Example 1 of the present invention. FIG 2A is a perspective view illustrating a vehicle body 11 configuring the vehicle C in FIG 1, FIG. 2B is an exploded perspective view illustrating a pillar configuring a vehicle body 11, and FIG 2C is a schematic cross-sectional view of FIG 2A. FIG 3 is a schematic front view illustrating an inside of the vehicle illustrated in FIG 1. FIG 4A is a schematic side view illustrating an inside of the vehicle illustrated in FIG 1, and FIG 4 B is a partially enlarged view of FIG 4A.

First, before explaining the speaker system for the mobile object 1A, the vehicle C as the mobile object is explained. The vehicle C includes the vehicle body 11 made of metal, a windshield covering a front opening 11A provided in a frond side in a front-back direction of the vehicle body 11, a side door 13 covering a side opening 11B provided in both sides in a width direction of the vehicle body 11, and a rear door 14 covering a rear opening 11C provided in a rear side in the front-back direction of the vehicle body 11.

In the vehicle C, from the front side in the front-back direction, an engine room and a compartment are formed, and there may be some vehicles in which a trunk is formed in the rear part in the compartment.

The compartment is formed in a box-shape surrounded by the windshield 12, a front surface S1 (FIG 4) configured of a dash panel (not shown) partitioning the engine room and the compartment, an upper surface (a top surface) S2 and a lower surface (a bottom surface) S3 of the vehicle body 11, a pair of the sides S4 (FIG 3) configured of a side in the width direction and a side door 13 of the vehicle body 11 and the like, and a rear surface S5 (FIG 4) configured of a rear surface and a rear door (when the vehicle is provided with the trunk, a rear shelf partitioning the compartment and the trunk, a bulkhead, and a rear window) of the vehicle body 11. In this compartment, a plurality of seats SH such as a driver's seat, a passenger seat, a back seat and the like are placed.

Further, the aforementioned vehicle body 11 is formed of, for example, as shown in FIGS. 2A, 2B, 2C and 3, a plurality of long frames such as pillars P1 to P3, a side sill (not shown), a reinforcement (not shown), and a cross member (not shown), and panels 11D, 11E, 11F, and 11G supported by these frames or an outer panel. The pillars P1 to P3 of the vehicle body 11 are tubular shaped frames supporting intervals between the panel 11D and 11G Here, a long frame indicates a frame which includes a planar shape having a longer direction and a shorter direction. Note that an inner surface of the panel 11D or an inner surface of an inner panel installed on the panel 11D becomes the aforementioned upper surface (the top surface) S2 and an inner surface of the panel 11G and the inner surface of the inner panel installed on the panel 11D becomes the aforementioned lower surface (the bottom surface) S3.

The pillars P1 to P3 form a portion of a side opening 11B. In the present invention, three pillars, the pillars P1 to P3, are provided in each of a left side and a right side. The pillar P1 forms a rear frame of the side opening 11B in a front side and a front frame of the side opening 11B in a rear side, and is provided along a vertical direction. Further, the pillar P2 forms the rear frame of the side opening 11B in the rear side, and is along the vertical direction. Further, the pillar P3 forms the front frame of the side opening 11B in the front side, and is along the vertical direction. Here, the side opening 11B indicates an opening provided on a side of the vehicle body 11 which is opened or closed by the side door 13 and the like. The front frame indicates the frame in the front side of the vehicle C, and the rear frame indicates the frame in the rear side of the vehicle C.

In the present invention, the three pillars of the pillars P1 to P3 are provided in each of the left side and the right side in the vehicle body 11, however, it is not limited to this, and as the pillars P1 to P3, one or more than one may be provided. As illustrated in FIG 2C, the pillars P1 to P3 are first tubular members configured of an outer pillar Po and an inner pillar Pi. The outer pillar Po and the inner pillar Pi are formed in a substantially U-shaped cross section including a long intermediate portion (a board portion) 21 and a pair of end portions 22 extending from both sides in the shorter direction of the intermediate portion 21. The intermediate portion 21 is formed long and flat. The end portion 22 extends from the intermediate portion 21 and includes a curved or bent shape. Thereby the outer pillar Po and the inner pillar Pi are formed in a tubular shape. Note that the outer panel is placed on an outside of the outer pillar Po, but the outer panel is omitted from FIG 2B and FIG 2C.

In the present invention, both of the outer pillar Po and the inner pillar Pi are formed in the substantially U-shaped cross section, however, it is not limited to this. For example, it may be that any one of the outer pillar Po and the inner pillar Pi is provided in the substantially U-shaped cross section and the other is provided flat such that the opening of the one in the substantially U-shaped cross section is closed with the other in a flat shape to be provided in the tubular shape.

Next, the speaker system for the mobile object 1A will be explained. The speaker system for the mobile object 1A is, as illustrated in FIG.1, FIG.3 and FIG4, provided in the vehicle C and includes speaker units 21A and 22A, enclosures 31A and 32A as accommodating units to accommodate the speaker units 21A and 22A, and acoustic tubes 41A and 42A connected respectively to enclosures 31A and 32A. The speaker unit 21A, the enclosure 31A and the acoustic tube 41A are provided in the front side of the vehicle C and the speaker unit 22A, the enclosure 32A, and the acoustic tube 42A are provided in the rear side of the vehicle C.

The speaker units 21A and 22A include a vibration plate, a voice coil supported by the vibration plate, an edge which connects the vibration plate with the frame, a magnetic circuit which drives (vibrates) the voice coil, the frame which supports the edge and magnetic circuit, and a damper which connects the voice coil to the frame. The speaker units 21A and 22A may emit the sound wave to make sound pressure of the middle and high sound range (for example, 1,000 Hz to 10,000 Hz) higher than that of the low sound range (for example, 10 Hz to 1,000 H).

The enclosures 31A and 32A are formed in a box-shape, and also provided in the vicinity of the upper surface (the top surface) S2 of the vehicle body 11. The enclosures 31A and 32A accommodate the speaker units 21A and 22A in the internal space therein with the vibration plate covering openings 31A1 and 32A1 provided on a front surface. The speaker units 21A and 22A are accommodated in the enclosures 31A and 32A, thereby emitting the sound wave from the openings 31A1 and 32A1 provided in the front surface of the speaker units 21A and 22A. Further, the sound wave generated at the back side of the speaker units 21A and 22A is emitted toward the internal space of the enclosures 31A and 32A.

The acoustic tubes 41A and 42Aare, as illustrated in FIG 3 and FIG 4, opened in the aforementioned the box-shaped compartment (a space), and the one end of which is connected to the internal space of the enclosures 31A and 32A, and the other ends of which are placed in the vicinity of the lower surface (the bottom surface) of the vehicle C. As illustrated in FIG 3, the acoustic tube 41A is formed of the pillar P1 (the first tubular member) configuring the vehicle body 11, the tubular member 41A1 as the second tubular member the one end of which is connected to the pillar P1 and the other end of which becomes the other end of the acoustic tube 41A, and the tubular member 41A2 as a third tubular member the one end of which is connected to the internal space of the enclosure 31A, and the other end which is connected to the pillar P1.

As illustrated in FIG 4, the acoustic tube 42A is configured of the pillar P2 (the first tubular member) configuring the vehicle body 11, the tubular member 42A1 as the second tubular member the one end of which is connected to the pillar P2 and the other end of which becomes the other end of the acoustic tube 42A, and the tubular member 42A2 as the third tubular member the one end of which is connected to the internal space of the enclosure 32A, and the other end which is connected to the pillar P2.

The acoustic tubes 41A and 42A are the tubular members in which only both ends are opened, and openings other than the both ends openings are closed. Thus, in the present invention, the openings other than the openings to be connected to the tubular members 41A1 and 42A1 and the openings other than the openings to be connected to the tubular members 41A1 and 42A1 in the pillars P1 and P2 are closed by plug members 5 (FIG 3). When the one ends or the other ends of the tubular members 41A, 42A1, 41A2 and 42A2 are opening, the plug member 5 may close them, and in a case where the both ends are closed, the plug member 5 may be used to adjust lengths of the tubular members 41A, 42A1, 41A2 and 42A2. Note that the plug member 5 is omitted in FIG 4.

The pillar P1 is, as illustrated in FIG 3, formed so that an equivalent circle diameter in one end side (the speaker unit 21A side) becomes r1, and that the equivalent circle diameter in the other end side becomes r2 (<r1). The pillar P1, between an equivalent circle diameter r1 and an equivalent circle diameter r2, is formed to become gradually smaller from r1 to r2 as heading toward the other end side. The pillar P2 is formed as the same but not shown in the diagram.

The acoustic tubes 41A and 42A are provided such that the one ends are connected to the opening provided in the pillars P1 and P2 and that the other ends are opened in the compartment. The other end of the acoustic tube 41A1, as illustrated in FIG 3, opens facing an intersection part R1 where the lower surface (the bottom surface) S3 and the side surrounding the compartment S4 intersect. The other end of the acoustic tube 42A1, as illustrated in FIG4, opens facing a corner C1 where the lower surface (the bottom surface) S3, the side S4 and the rear surface S5 surrounding the compartment intersect. The acoustic tube 42A is formed, as described later, such that a length thereof has resonance frequency (for example, 30 Hz to 100 Hz) corresponding to a standing wave formed in the compartment. The one ends of the aforementioned tubular members 41A1 and 42A1 and the pillars P1 and P2 may be connected to each other through a connecting member such as rubber, an adhesive or the like, or may be welded. Further, the equivalent circle diameter of the tubular members 41A1 and 42A1 is, as illustrated in FIG3, formed to become the same as the equivalent circle diameter r2 in the other end side.

The tubular members 41A1 and 42A1 are provided so that the one ends thereof are connected to the opening in the rear surface side of the enclosures 31A and 32A, and the other ends thereof are connected to the opening provided in the pillars P1 and P2. A connection of the one ends of the tubular members 41A1 and 42A1 and the enclosures 31A and 32A, and a connection of the other ends of the tubular members 41A2 and 42A2 and the pillars P1 and P2 may be carried out through the connecting members such as the rubber, the adhesive or the like, or by welding. Further, the equivalent circle diameter of the tubular members 41A2 and 42A2 is, as illustrated in FIG3, formed to become the same as the equivalent circle diameter r1 in the one ends side of the pillars P1 and P2.

An advance and a reflection of the sound wave when the speaker units 21A and 22A emitted the sound wave in the above mentioned speaker system for a the mobile object 1A will be described. First, the sound wave emitted from the front surface of the speaker units 21A and 22A is emitted in the compartment in an intact way. The sound wave generated at the back side of the speaker units 21A and 22A echoes in the internal space of the enclosures 31A and 32A, and along with that, enters the inside of the acoustic tubes 41A and 42A and advances in the aforementioned tubular members 41A2 and 42A2, the pillars P1 and P2, and the tubular members 41A1 and 42A1, in this order.

At this time, a component of a low sound range corresponding to the length of the acoustic tubes 41A and 42A among sounds generated at the back side of the speaker units 21A and 22A resonates in the acoustic tubes 41A and 42A. Therefore, the sound wave constituted mainly of the component of the low sound range is emitted from the opening of the other ends of the acoustic tubes 41A and 42A, that is, the opening of the other ends of the tubular members 41A1 and 42A1, into the compartment. In other words, a component of the middle and high sound range of the sound wave emitted from the other ends of the acoustic tubes 41A and 42A have been cut. The low sound emitted from the opening of the other end of the acoustic tube 41A is reflected on the side S4 and the lower surface (the bottom surface) S3 and echoes in the compartment.

The low sound emitted from the opening of the other end of the acoustic tube 42A is reflected on the corner C1 and the surrounding surfaces S3 to S4, advances toward an opposing corner C2 opposed to the corner C1 (a corner where the front surface S1, the lower surface (the bottom surface) S3, and the side S4 intersect), is reflected again on the opposing corner C2 and the surrounding surfaces S1, S3 and S4, and advances toward the corner C1. Thus, the standing wave having a wavelength which corresponds to a distance between the corner C1 and the opposing corner C2 is formed by the sound wave heading to the opposing corner C2 from the corner C1 and the sound wave heading to the corner C1 from the opposing corner C2. The frequency of the standing wave and the resonance frequency of the acoustic tube 42A almost correspond, and the low sound amplified by the acoustic tube 42A and emitted from the other end forms the standing wave in the compartment. As described above, since the acoustic tube 42A has the resonance frequency corresponding to the standing wave formed in the compartment, a component resonated among the sound waves emitted from the other end of the acoustic tube 42A forms the standing wave.

The sound wave is emitted as mentioned above, thereby echoing the sound wave having the component constituted mainly of the middle and high sound range emitted from the front surface side of the speaker units 21A and 22A and the sound wave constituted mainly of the component of the low sound range emitted from the opening of the other ends of the acoustic tubes 41A and 42A in the compartment.

According to aforementioned Example 1, further, at least one portion of the acoustic tubes 41A and 42A includes the pillars P1 and P2 configuring a portion of the vehicle body 11. According to this, since the pillars P1 and P2 configuring a portion of the vehicle body 11 is made to be at least one portion of the acoustic tubes 41A and 42A, it is possible to save space.

Further, according to aforementioned Example 1, portions of the acoustic tubes 41A and 42A are configured by the pillars P1 and P2, and the other ends of the acoustic tubes 41A and 42A are placed at a location closer to the lower surface (the bottom surface) S3 surrounding the box-shaped compartment than the speaker units 21A and 22A. According to this, by providing the opening of the other ends of the acoustic tubes 41A and 42A near the lower surface (the bottom surface) S3, it is possible to reflect the low sound on the lower surface (the bottom surface) S3, and the low sound echoes.

Further, according to Example 1, the one ends of the acoustic tubes 41A and 42A are connected to the pillars P1 and P2, the other ends include the tubular members 41A1 and 42A1 which become the other ends of the acoustic tubes 41A and 42A. Thus, without a location of the openings of the ends of the acoustic tubes 41A and 42A being restricted, it is possible to direct the openings of the ends of the acoustic tubes 41A and 42A to a location where acoustic characteristics are good, such as, for example, the aforementioned intersection part R1 where the lower surface (the bottom surface) S3 and the side S4 intersect, and the corner C1.

Further, according to aforementioned Example 1, the acoustic tubes 41A and 42A include the tubular members 41A2 and 42A2 the one ends of which are connected to the enclosures 31A and 32A and the other ends of which are connected to the pillars P1 and P2. Thus, without a location of the enclosures 31A and 32A being restricted, it is possible to make the pillars P1 and P2 configuring the vehicle body 11 the portion of the acoustic tubes 41A and 42A.

Note that, according to aforementioned Example 1, the pillars P1 and P2 are formed so that the equivalent circle diameter in the one end side becomes r1, and that the equivalent circle diameter in the other end side becomes r2 (<r1), however, it is not limited to this. For example, the pillars P1 and P2 may be formed so that the equivalent circle diameter becomes the same from the one end to the other end.

Further, as viewed from above in the Example 1, the other end of the acoustic tube 41A opens toward the intersection part R1 where the lower surface (the bottom surface) S3, the side S4 intersect, and the other end of the acoustic tube 42A opens toward the corner C1 where the lower surface (the bottom surface) S3, the side S4 and the rear surface S5 intersect, but it is not limited to this. The other end of the acoustic tube may open toward a corner where (corners C1 to C3 as illustrated in FIG 4B) arbitrary three of a plurality of surfaces surrounding a room space of the vehicle (an inner surface of a windshield W, the upper surface (the top surface) S2, the front surface S1, the lower surface (the bottom surface) S3, a pair of the sides S4, and the rear surface S5) intersect. Further, the other end of the acoustic tube may open toward an intersecting part where arbitrary two of the plurality of these surfaces intersect (FIG 4B), may open opposed to one surface, or may be along the surface.

Note that the corner C1 is a corner where the lower surface (the bottom surface) S3, the side S4, and the rear surface S5 of the vehicle C intersect, the corner C2 is a corner where the front surface S1, the lower surface (the bottom surface) S3 and the side S4 of the vehicle C intersect, and a corner C3 is a corner where the rear surface S5, the upper surface (the top surface) S2 and the side S4 of the vehicle C intersect. Further, the intersection part R1 is an intersection part where the lower surface (the bottom surface) S3 and the side S4 of the vehicle C intersect, an intersection part R2 is an intersection part where the upper surface (the top surface) S2 and the rear surface S5 of the vehicle C intersect, an intersection part R3 is an intersection part where the rear surface S5 and the lower surface (the bottom surface) S3 of the vehicle C intersect, an intersection part R4 is an intersection part where the rear surface S5 and the side S4 of the vehicle C intersect, an intersection part R5 is an intersection part where the front surface S 1 and the lower surface (the bottom surface) S3 of the vehicle C intersect, an intersection part S6 is an intersection part where the front surface S1 and the side S4 of the vehicle C intersect, an intersection part S7 is an intersection part where the front surface S1 and the upper surface (the top surface) S2 of the vehicle C intersect, and an intersection part S8 is an intersection part where the upper surface (the top surface) S2 and the side S4 of the vehicle C intersect.

### Example 2

Note that, as viewed from above in aforementioned Example 1, the pillars P1 and P2 of the vehicle body 11 are portions of the acoustic tubes 41A and 42A, however, it is not limited to this. Letting a side sill SS which is a long tubular frame configuring the vehicle body 11 be a portion of an acoustic tube may also be considered. First, the side sill SS will be described. The side sill SS forms a lower frame of a side opening 11B of the aforementioned vehicle body 11. The side sill SS is provided in a tubular shape along a front-back direction. Here, an upper frame and the lower frame indicate a frame located in an upper side, or in a lower side of the vehicle.

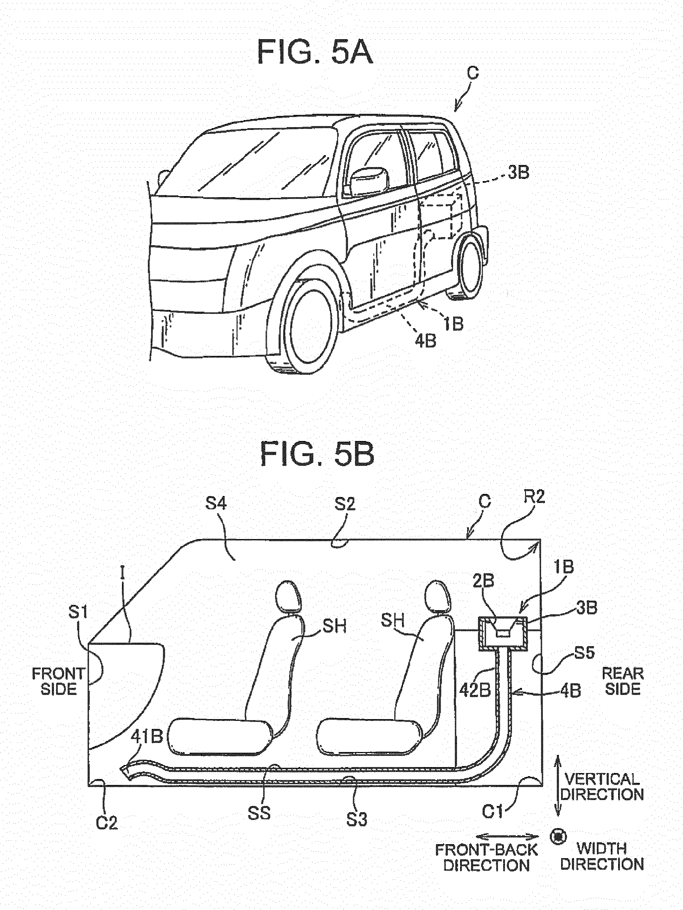

FIGS. 5A and 5B are a perspective view and a side view illustrating a speaker system for a mobile object according to example 2 of the present invention. A speaker system for a mobile object 1B includes, as illustrated in FIGS. 5A and 5B, a speaker unit 2B, an enclosure 3B, and an acoustic tube 4B.

Since a configuration of the speaker unit 2B and the enclosure 3B is the same as those of the speaker units 21A and 22A, and the enclosures 31A and 32A in Example 1, a detailed explanation thereof will be omitted. What is different from Example 1 is a placing location of the speaker unit 2B and the enclosure 3B. In Example 2, as illustrated in FIGS. 5A and 5B, the speaker unit 2B and the enclosures 3B are provided in the vicinity of an intersection part R2 where an upper surface (the top surface) S2 and a rear surface S5 of a vehicle C intersect.

The enclosure 3B is provided heading to the rear of a headrest of a seat SH in a central part in the width direction and a rear side, an opening is provided on a top surface thereof, and is accommodating the speaker unit 2B such that a sound wave is emitted from the opening toward an upper side of the vehicle C. One end of the acoustic tube 4B is connected to a lower surface of the enclosure 3B.

The acoustic tube 4B is configured of the side sill SS configuring the vehicle body 11, a tubular member 41B as a second tubular member the other end of which becomes the other end of an acoustic tube 4B and one end which connected to the side sill SS, and a tubular member 42B as a third tubular member one end of which is connected to an internal space of the enclosure 3B and the other end of which is connected to the side sill SS.

The tubular member 41B extends toward a lower side and one of sides S4 of the vehicle C from a lower surface of the enclosure 3B, and is connected to a rear end of the side sill SS extending in a front-back direction at a lower part of a door of the vehicle C. One end of the tubular member 42B is connected to a front end of the side sill SS, and the tubular member 42B heads to an upper side once and after that heads to a lower side, the other end of which therefore opens toward a corner C2.

Sound wave emitted from the speaker unit 2B heads to the intersection part R2, and the sound wave emitted from the other end of the acoustic tube 4B heads to the corner C2. Note that it may also be configured such that the enclosure 3B is provided either in the left or the right in a width direction, and that the sound wave emitted from the speaker unit 2B heads to a corner where the upper surface (the top surface) S2, the side S4, and the rear surface S5 intersect. Further, the other end of the acoustic tube 4B may be facing toward an intersection part where at least two surfaces intersect, for example, it may be facing toward an intersection part where two surfaces of the front surface S1 and the lower surface (the bottom surface) S3 intersect, or it may also be facing toward the an intersection part where two surfaces of the side S4 and the lower surface (the bottom surface) S3 intersect.

According to this kind of speaker system for the mobile object 1B in Example 2, a low sound emitted by the other ends of the speaker unit 2B and the acoustic tube 4B, is reflected at the corner or the intersection part in the front and the rear of the vehicle C, and it is possible to improve acoustic characteristics of sound pressure of the low sound range or the like even more effectively.

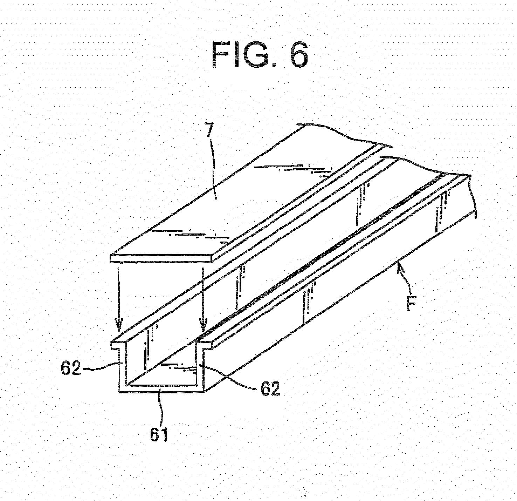

Note that, according to aforementioned Examples 1 and 2, the tubular frames such as the pillars P1 to P3 and the side sill SS configuring the vehicle body 11 were made one portion of the acoustic tubes 41A, 42A and 4B, however, the present invention is not limited to this. For example, a reinforcement and a cross member of long frames F configuring the vehicle body 11, as illustrated in FIG 6, may be provided in a substantially U-shaped cross section configured of a basal board 61, and a pair of upright plates 62 being erected from the basal board 61 in the width direction. The first tubular member is formed such that the frame F like this is installed with a covering member 7 which is provided separating from the vehicle body 11 and covering the opening, and may become a portion of the acoustic tube. That is, the first tubular member may include at least the long frame F configuring the vehicle body 11.

Further, according to aforementioned Examples 1 and 2, the other end of the acoustic tube opens facing the intersection part where two of a plurality of surfaces surrounding a compartment intersect or the corner where tree surfaces intersect, however, it is not limited to this. The other end of the acoustic tube may be directed only to one of the plurality of surfaces configuring the compartment, or, may not be directed to any of the surfaces.

Further, according to aforementioned Examples 1 and 2, other than the pillar and the side sill configuring the vehicle body, the acoustic tube included the tubular member which was connected to these pillar and the side sill, however, it is not limited to this. Depending on a shape of the tubular frame which configures a portion of the vehicle body, the tubular member is not required.

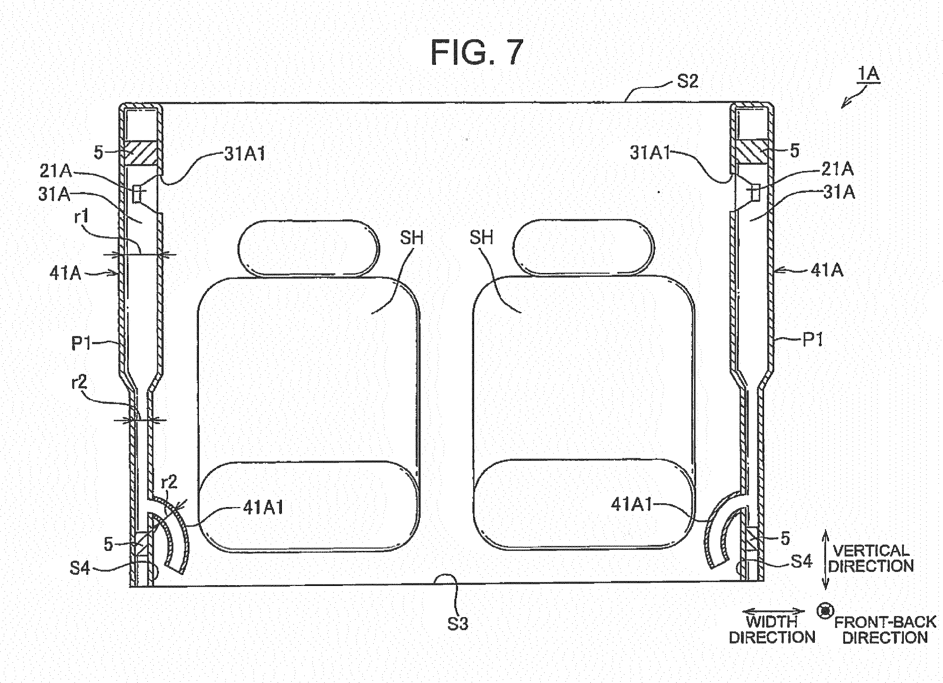

Further, according to aforementioned Examples 1 and 2, the enclosure was provided separately from the vehicle body such as the pillar and the side sill, however, it is not limited to this. For example, as illustrated in FIG 7, the speaker unit 21A is placed in the pillar P1, and thereby a portion of the pillar P1 may be the enclosure. The pillar P1 is formed, the same as Example 1, such that an equivalent circle diameter in one end side becomes r1, and the equivalent circle diameter in the other end side becomes r2 (<r1).

As illustrated in an example in FIG 7, an opening 31A1 is provided on the side of the one end side (the upper side) of the pillar P1. The speaker unit 21 is accommodated in the pillar P1 such that a vibration plate covers the opening 31A1. The portion of the pillar P1 accommodating the speaker unit 21A becomes the enclosure 31A. Further, as illustrated in FIG 7, the acoustic tube 41A is formed of a portion which is closer to the other end side (the lower side) than the portion of the enclosure 31A of the pillar P1 and the tubular member 41A1. Since the acoustic tube 41A1 is the same as Example 1, a detailed explanation will be omitted. Further, not only the pillar P1 but a portion of the vehicle body such as the side sill SS may be the enclosure. Thus, the portion of the vehicle body becomes the enclosure, thereby saving space.

Further, frequency-dependency of the sound wave emitted by the speaker unit may be set appropriately. Even in a case where the sound pressure of the low sound range emitted from a front side by the speaker unit is high, and even when the sound wave from the front side and the sound wave from the other end weaken each other, if the sound pressure of the low sound which resonates in the acoustic tube and is emitted from the other end is high enough, it is possible to secure the sound pressure of the low sound. That is, in a case where the sound pressure of the low sound improves well enough by resonance in the acoustic tube, a speaker unit which emits the sound wave such that the sound pressure from the low sound range to the middle and high sound range remains about the same, or a speaker unit which emits the sound wave such that the sound pressure of the low sound range becomes higher than that of the middle and high sound range may be used, or a speaker unit for the middle and high sound range (a tweeter) may also be used. Further, a shape of the speaker unit is not specifically limited, and it may be a corn type or a dome type.

Further, according to Examples 1 and 2, the other end of the acoustic tube was provided to open toward only one of the corners C1 and C2, however, it is not limited to this. A pair of speaker units for a mobile object may be provided such that the other end of the acoustic tube of a speaker unit is directed to the corner C1, and that the other end of the acoustic tube of the other speaker unit is directed to the corner C2. This time, it is preferable to place the other end such that a location of a node of a standing wave formed by the one speaker unit is deviated from that of the node of the standing wave formed by the other speaker unit. In addition, it is preferable to place the other end so that the location of the node of the one standing wave and the location of the node of the other standing wave almost correspond. According to this kind of configuration, it is possible to reduce location-dependency of the sound pressure in the compartment by deviating the nodes of the two standing waves or by making the node and an antinode almost correspond.

### Example 3

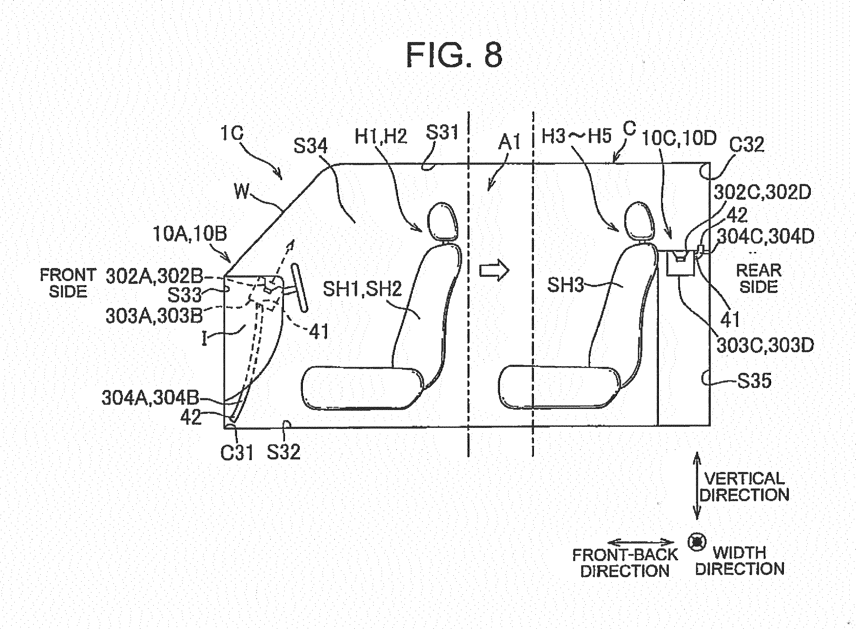

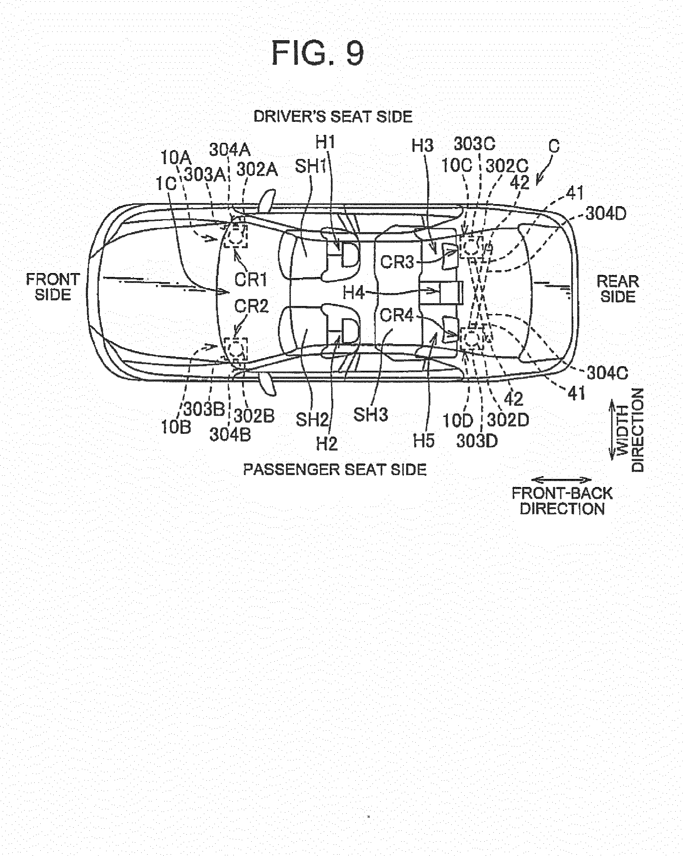

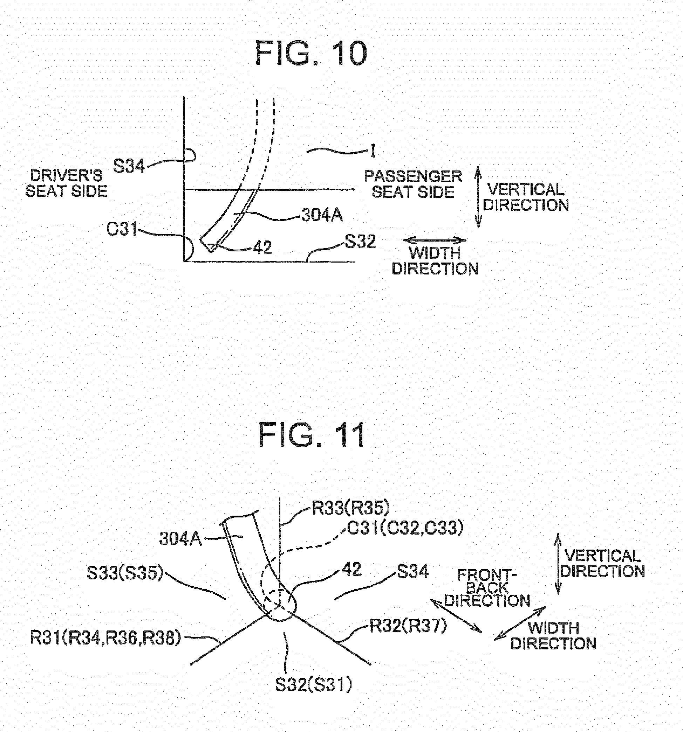

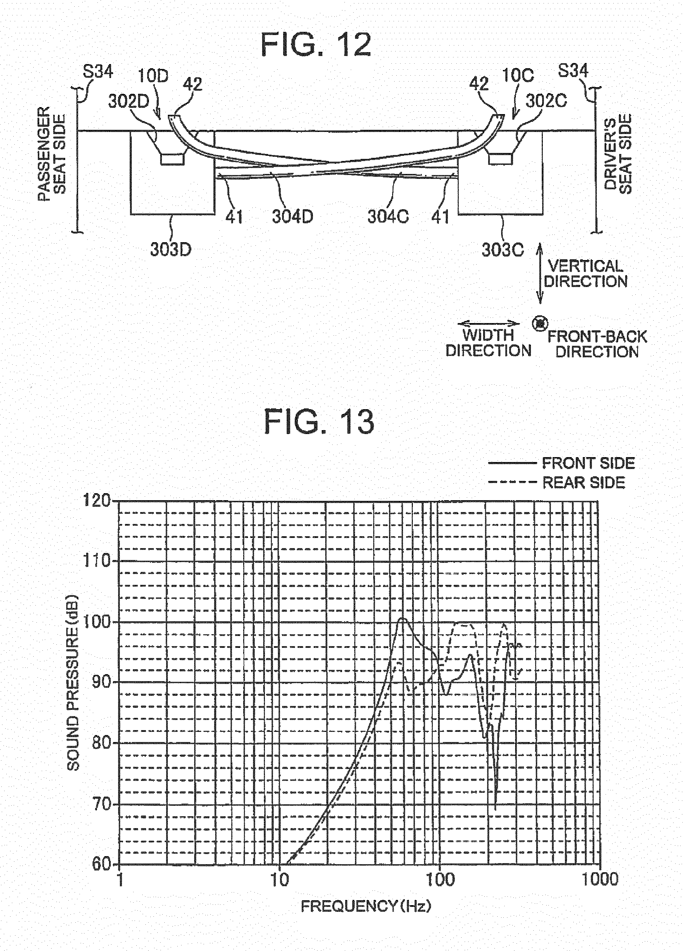

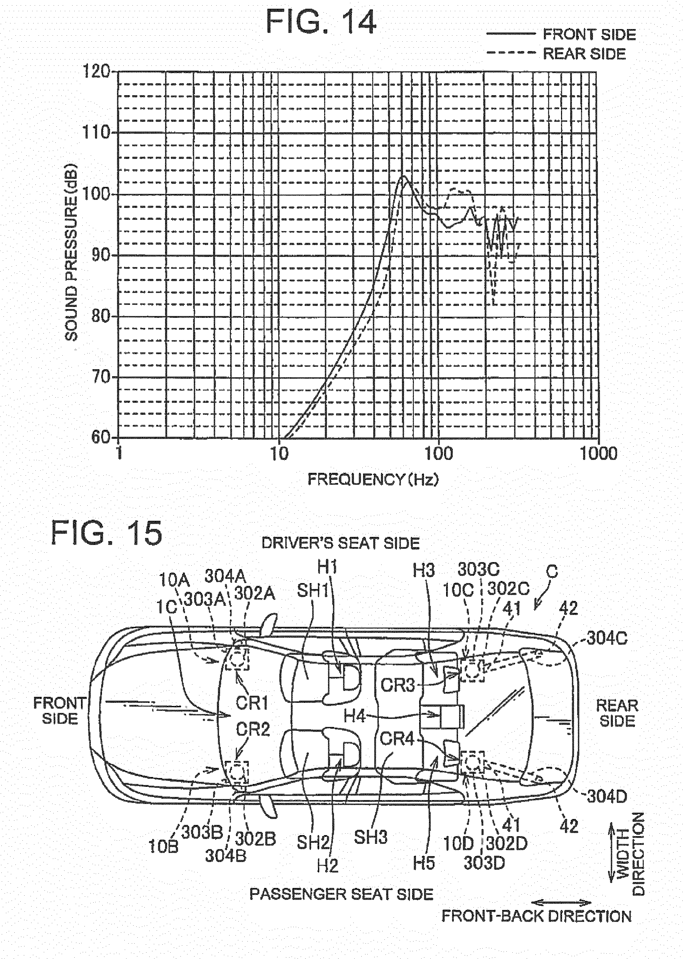

Example 3 of the present invention will be described specifically below. FIG 8 is a side view illustrating a vehicle C provided with a speaker system for a mobile object 1C according to example 3 of the present invention, FIG 9 is a plan view illustrating the vehicle C provided with the speaker system for the mobile object 1C, FIG. 10 is a front view illustrating a main portion of an acoustic tube 304 of the speaker system for the mobile object 1C, FIG 11 is a perspective view illustrating the acoustic tube 304, FIG 12 is a rear view illustrating speaker devices 10C and 10D in a rear side of the speaker system for the mobile object 1C, FIG 13 is a graph showing acoustic characteristics of the speaker system for the mobile object 1C according to a modification of the present invention, and FIG 14 is a graph showing acoustic characteristics of the speaker system for the mobile object 1C according to the example.

The speaker system for the mobile object 1C is, as illustrated in FIGS. 8 and 9, provided in the vehicle C as a mobile object, and includes four speaker devices 10A to 10D.

The vehicle C forms a box-shaped room space of the vehicle A1 surrounded by an the inner surface of a windshield W, an upper surface (a top surface) S31 of the vehicle body, a lower surface (a bottom surface) S32, a front surface S33 in a travelling direction (in a front-back direction) of the vehicle C, a pair of sides S34 (including a door body of the vehicle) which oppose to each other in a width direction, and a rear surface S35 in the travelling direction of the vehicle C. Further, an instrument panel I is provided on the front surface S33, and a driver's seat SH1 and a passenger seat SH2 as front seats are provided opposed to the rear side of the instrument panel I. Further, a three-seater bench-like back seat SH3 is provided in the rear side of the driver's seat SH1 and the passenger seat SH2. Head positions of passengers seating on the driver's seat SH1 and the passenger seat SH2 are hereinafter referred to as head positions H1 and H2 respectively, and head positions of passengers seating on respective seating positions of a back seat SH3 are hereinafter referred to as head positions H3 to H5 in an order from the driver's seat SH1 side.

A speaker device 10A is provided at a corner CR1 on a front side in a front-back direction and the driver's seat SH1 side in the width direction (in an example of the diagram, on the right when facing the front side) in the room space of the vehicle A1. A speaker device 10B is provided at a corner CR2 of the passenger seat SH2 side (on the left when facing the front side in an example shown in the diagram) on the front side and in the width direction in the room space of the vehicle A1. A speaker device 10C is provided at a corner CR3 on the rear side and in the front-back direction and on the driver's seat SH1 side in the room space of the vehicle A1. A speaker device 10D is provided at a corner CR4 on the rear side and in the passenger seat SH2 side in the room space of the vehicle A1. That is, the four speaker devices 10A to 10D are provided at the corners CR1 to CR4 which are different from one another. The four speaker devices 10A to 10D are placed in the room space of the vehicle A1, thereby generating a standing wave in the front-back direction and in the width direction in the vehicle C, which makes possible to improve acoustic characteristics in the room space of the vehicle A1. Further, since the sound wave is emitted from speaker devices 10A to 10D, to the passengers seating on the driver's seat SH1, the passenger seat SH2, and the back seat SH3, the passengers are able to listen to reproduced sound with presence, and it is possible to make the room space of the vehicle A1 be a pleasant space.

Respective ones of the speaker devices 10A to 10D include speaker units 302A to 302D, enclosures 303A to 303D as accommodating units accommodating the speaker units 302A to 302D, and acoustic tubes 304A to 304D connected to the enclosure 303A to 303D. The speaker device 10A and the speaker device 10B in the front side which are opposed to each other in the width direction are configured substantially plane-symmetrically having a surface which is substantially intersecting in the width direction as a plane of symmetry. Further, the speaker device 10C and the speaker device 10D in the rear side also include the same symmetry. Therefore, in the following description, in a case where only one of the speaker devices 10A and 10B is explained, the other also is made to have the same configuration, and in a case where only one of the speaker devices 10C and 10D is explained, the other also is made to have the same configuration.

The speaker units 302A to 302D include a vibration plate, a voice coil which is supported by the vibration plate, an edge which connects the vibration plate to a frame, a magnetic circuit which drives (vibrates) the voice coil, the frame which supports the edge and the magnetic circuit, and a damper which connects the voice coil to the frame. The speaker units 302A to 302D may emit the sound wave such that sound pressure of a middle and high sound range (for example, 1,000 Hz to 10,000 Hz) becomes higher than that of a low sound range (for example, 10 Hz to 1,000 Hz). Further, the vibration plate is provided with a side from which the speaker units 302A to 302D emit the sound wave (a front surface side) facing an upper part of the vehicle C, and along with that, with the magnetic circuit side (the back side) facing a lower part of the vehicle C. Further, the speaker units 302A and 302B may be provided in the instrument panel I so that a vibration direction (a sound emission direction) of the vibration plate of the speaker units 302A and 302B in the front side inclines at a predetermined degree (for example, 30 degrees) against the upper surface of the instrument panel I. Further, speaker units 302C and 302D in the rear side may be provided such that a vibration direction (or a sound emission direction) of the vibration plate may substantially intersect an upper surface S31. Note that in a case where the speaker unit is installed in the instrument panel I in a state where the vibration plate is inclined against the upper surface of the instrument panel I, an angle of inclination of the each vibration plate against the upper surface of the instrument panel I may be set appropriately as necessary according to an angle of the windshield W and a distance between the seat SH and the speaker units 302A to 302D or the like, and in such a case, a central axis of the speaker units 302Ato 302D or the vibration plate may not have to be inclined. In a case where the central axis of the speaker unit 302 or the vibration plate is not made to incline, the speaker unit 302 may be installed such that the vibration plate is placed along the upper surface of the instrument panel I. Further, the central axis of the speaker units 302A to 302D or the vibration plate may be directed to each of the seats SH1 and SH2 (on the back seat SH3, each seating position).

The enclosures 303A to 303D are formed in a box-shape and on a top surface of which the vibration plate is placed, and have the speaker units 302A to 302D placed in an internal space thereof formed by a bottom surface and four sides, and thus accommodating a part in the rear side of the speaker units 302A to 302D in the enclosures 303A to 303D. The enclosures 303A and 303B in the front side are provided, for example, in the instrument panel I, and the enclosures 303C and 303D in the rear side are provided, for example, above a trunk. Further, the enclosures 303A to 303D may be provided on the top surface having an inclined surface such that the sound wave emitted from the vibration plate is inhibited from reflecting on a part of the enclosure 303, and also that the sound wave is emitted in the room space of the vehicle A1. Further, the enclosures 303A to 303D are, in the width direction, placed in the vicinity of the side S34, and respectively placed at the corners CR1 to CR4.

By being accommodated in the aforementioned enclosures 303A and 303B, the speaker units 302A and 302B on the front side are provided in the instrument panel I to emit the sound wave from the front surface on the upper surface of the instrument panel I. Further, the speaker units 302A and 302B in the rear side are provided above the trunk to emit the sound wave from the front surface toward the upper surface S31. Further, the sound wave generated at the back side of the speaker units 302A to 302D is emitted toward the internal space of the enclosure 303A to 303D.

Acoustic tubes 304Ato 304D formed in a cylindrical shape having both their ends opened, using known metal, resin and the like, the shape of a section and a cross sectional area are substantially constant from one end 41 side to the other end 42 side, and are formed making their lengths have appropriate resonance frequency (for example, 30 Hz to 100 Hz). Note that the acoustic tubes 304A and 304B in the front side and the acoustic tubes 304C and 304D in the rear side have about the same length, and times required from beginning of operation of the speaker units 302A to 302D (vibration of the vibration plate) to emission of the sound wave from the later described other end 42 are about the same. Further, the acoustic tubes 304A to 304D are, the same as Example 1, configured of a pillar, a side sill, a reinforcement, a cross member or the like at least a portion of which configuring a vehicle body 11. Since the one end 41 is linked to the lower surface as the back side of the speaker units 302A and 302B in the enclosure 303A and 303B.

Since the one end 41 is linked to the lower surface as the back side of the speaker units 302A and 302B in the enclosure 303A and 303B, the acoustic tube 304A and 304B are connected to the internal space of the enclosures 303A and 303B, and along with that, the other end 42 is placed in a foot part of the driver's seat SH1 or the passenger seat SH2 (in the case of the driver's seat SH1, the vicinity of an accelerator pedal). Further, as illustrated in FIGS. 10 and 11, in a lower part of the instrument panel I, the other end 42 opens toward the corner C31 where the front surface S33, the lower surface S32, and the side S34 intersect. Further, the acoustic tubes 304A and 304B pass through in the instrument panel I on the other end 41 side, and are protruding to the outside of the instrument panel I on the other end 42 side. Further, from the one end 41 to the other end 42 in the width direction, the acoustic tube 304A on the driver's seat SH1 side extends to get apart once from the side S34 on the driver's seat SH1 side, and then extends as to come near the side S34 again. That is, when being looked at in the front-back direction, the acoustic tube 304A has a bending shape which is bulging out convexly toward a side of the passenger seat. Further, the acoustic tubes 304A and 304B extend so as to be directed toward the front side as approaching to the other end 42 from the one end 41 in the front-back direction.

As illustrated in FIG 12, by being linked to the one end 41 on the side of the inner side of the enclosure 303C and 303D in the width direction of the mobile object, the acoustic tubes 304C and 304D in the rear side are connected to the internal space of the enclosures 303C and 303D, and also, extend toward the outside. That is, from the one end 41 to the other end 42, the acoustic tube 304C on the driver's seat SH1 side extends from the enclosure 303C toward the passenger seat SH2 side, and the acoustic tube 304D on the passenger seat SH2 side extends from the enclosure 303D toward the driver's seat SH1 side. Further, the acoustic tubes 304C and 304D extend toward the rear side from the one end 41 to the other end 42 in the front-back direction of the vehicle C, and the other end 42 of the acoustic tube 304C is located in the rear side of the enclosure 303D, and the other end 42 of the acoustic tube 304D is located in the rear side of the enclosure 303C. Thus, the acoustic tubes 304C and 304D extend intersecting each other. Further, although being apart from the upper surface S31, the other ends 42 of the acoustic tubes 304C and 304D open toward the corner C2 where the upper surface S31, the rear surface S35, and the side S34 intersect. Note that, a corner is made to be a part where three surfaces intersect, and to be included in an intersection part where at least two surfaces intersect. That is, the corner C31 in the front side functions as the intersection part in the front side, and the corner C32 in the rear side functions as the intersection part in the rear side.

An advance and a reflection of the sound wave when the speaker units 302A to 302D emitted the sound wave in the above mentioned speaker system for the mobile object 1C will be described. First, the sound wave emitted from the front surface of the speaker units 302A and 302B in the front side, for example, in a case where the vibration plate has a corn shape or a dome shape, advances to the diagonal rear corresponding to an inclination of the vibration plate, and heads to the locations of the head part H1 and H2 in the front side. Note that the sound wave emitted from the front side may be reflected on the windshield W or the upper surface S1, and may head to the locations of the head parts H1 and H2. On the other hand, the sound wave emitted from the front surface side of the speaker units 302C and 302D in the rear side, directly or reflected on the upper surface S31 or the rear surface S35, heads to locations of head parts H3 to H5 in the rear side.

The sound wave generated at the back side of the speaker units 302A to 302D echoes in the internal space of the enclosures 303A to 303D, and along with that, enters the inside of the acoustic tubes 304A to 304D from the one end 41 and advances in the acoustic tubes 304A to 304D. At this time, a component of a low sound range corresponding to lengths of the acoustic tubes 304A to 304D among sounds generated at the back side of the speaker units 302A to 302D resonates in the acoustic tubes 304A to 304D. Therefore, the sound wave constituted mainly of the component of the low sound range is emitted from the other ends 42 of the acoustic tubes 304A to 304D. In other words, a component of the middle and high sound range of the sound wave emitted from the other end 42 of the acoustic tube 304 is cut. "Being cut" means that the sound pressure of the component of the middle and high sound range becomes lower than that of the component of the low range. The sound wave emitted from the other ends 42 of the acoustic tubes 304A and 304B is reflected on the corner C31 and the surfaces S32 to S34 surrounding the corner C31, and advances toward the corner C32 opposed to the corner C31 (that is, the corner C32 in an opposite side of the corner C31 in the width direction). On the other hand, the sound wave emitted from the other ends 42 of the acoustic tubes 304C and 304D in the rear side is reflected on the corner C32 and the surrounding surfaces S31, S35, and S34, and advances toward the corner C31 in the opposite side.

The standing wave is formed between the corners C31 and the corners C32 which oppose to each other in the front-back direction and the width direction of the vehicle C, by the sound wave which is emitted from the other ends 42 of the acoustic tubes 304A and 304B in the front side, and also by the sound wave which is emitted from the other end 42 of the acoustic tube_304C and 304D in the rear side. The standing wave has a sound wave having the corner C31 and the corner C32 as fixed ends, and corresponding to an interval of the corners C31 and the corners C32.

The sound wave is emitted as mentioned above, thereby echoing the sound wave constituted mainly of the component of the middle and high sound range emitted from the front side of the speaker units 302A to 302D, and the sound wave constituted mainly of the component of the low sound range emitted from the other ends 42 of the acoustic tubes 304Ato 304D in the room space of the vehicle A1.

At this time, as precisely explained next, the speaker units 302A and 302B in the front side, and the speaker units 302C and 302D in the rear side operate with a predetermined time difference so that a node of the standing wave becomes apart from the head positions H1 and H2 in the front side to the rear side. Here, as the predetermined time difference, 1 ms to 9 ms are mentioned for example.

First, as a modification, a case where the sound wave is emitted from the other end 42 of the acoustic tube 304A in the front side, and from the other end 42 of the acoustic tube 304C in the rear side almost simultaneously (that is, of a coordinate phase) is considered. As illustrated in FIG 8 with two-dot chain lines, in the standing wave having about the same sound wave in an interval between the corner C31 and C32 of the acoustic tube 304A, an intermediate position of the corners C31 and of the corners C32, that is, a central part in the front-back direction of the room space of the vehicle A1, becomes the node. The node is located in the rear side and the vicinity of the head positions H1 and H2, and the sound pressure of the frequency decreases as the location becomes closer to the node. Hence, in order to place the node of the standing wave at a location illustrated with a dashed chain line, the speaker unit 302A and the speaker unit 302C are made to be operated with a time difference.

Here, a change of the characteristics of the sound pressure caused by differentiating operation timing of the speaker unit 302A in the front side and that of the speaker unit 302C in the rear side will be described. First, the characteristics of the sound pressure in a case where the speaker unit 302A and the speaker unit 302C operate almost simultaneously as the speaker system for the mobile object in the modification to form the node in the standing wave at a location which is illustrated with the two-dot chain lines in FIG. 8 is illustrated in FIG. 13. A horizontal axis in FIG. 13 indicates a frequency displayed logarithmically, and a vertical axis indicates the sound pressure, and the characteristics of the sound pressure mean frequency-dependency of the sound pressure. Further, a solid line in the graph shows the sound pressure in the head positions H1 and H2 in the front side, and a broken line shows the sound pressure of the head positions H1 to H3 in the rear side. Note that the interval of the corners C31 and of the corners C32 is about 1.7 m.

The sound pressure at the head positions H1 and H2 in the front side and the head positions H1 to H3 in the rear side indicated the minimum value (about 69 dB and about 82 dB each) in 200 Hz to 210 Hz. When being converted into the wavelength, this frequency becomes about the same as the interval of the corners C31 and of the corners C32. That is, it can be considered that the standing wave having the wavelength about the same as the interval of the corners C31 and of the corners C32 was formed, and that the sound pressure was decreased by the node in the standing wave.

Next, the acoustic characteristics of the sound pressure in a case where the speaker units 302A and 302C operate with a time difference in the speaker system for the mobile object 1C in Example to form the node in the standing wave at a location which is illustrated with a broken line in FIG 8 is illustrated in FIG 14. The axis in FIG 14 is the same as FIG 13, a solid line in the graph shows the sound pressure in the head positions H1 and H2 in the front side, and a broken line shows the sound pressure in the head positions H1 to H3 in the rear side.

The sound pressure in the head positions H1 and H2 in the front side became about 91 dB in 200 Hz to 210 Hz, and hardly decreased comparing frequencies in front and behind, and a large decrease was not seen in other frequencies either. Further, the sound pressure in the head positions H3 to H5 in the rear side indicated the minimum value (about 82 dB) in 200 Hz to 210 Hz. Therefore, an improvement of the characteristics of the sound pressure was confirmed at the frequency corresponding to a wavelength of the standing wave by letting the speaker units 302A and 302C in the front and the rear operate with a time difference, and placing the location of the node in the standing wave apart to the rear side from the head positions H1 and H2 in the front side.

According to the above mentioned configuration, since the speaker system for the mobile object 1C has the four speaker devices 10A to 10D and respective ones of them are placed at the corners CR1 to CR4 of the vehicle C, even when a free space at each of the corners CR1 to CR4 is small, it is possible to improve the sound pressure of the emitted sound of the entire speaker system for the mobile object 1C and to improve the acoustic characteristics.

Further, since the one ends 41 of the acoustic tubes 304A to 304D are connected to the inner space of the enclosures 303A to 303D, the component of the low sound range corresponding to the length of the acoustic tubes 304A to 304D among sound waves generated in the back side of the speaker units 302A to 302D resonates in the acoustic tubes and is emitted from the other end 42. Since the other ends 42 of the acoustic tubes 304A to 304D open toward the corners C31 and C32 where at least three of a plurality of surfaces surrounding the room space of the vehicle A1 intersect, the low sound emitted from the other end 42 is reflected on the three surfaces and echoes easily in the room space of the vehicle A1, and it is possible to improve the acoustic characteristics of the low sound range of the speaker system for the mobile object 1C.

Further, in a case where the speaker units 302A to 302D emit the sound wave such that the sound pressure of the middle and high sound range becomes higher than that of the low sound range, it is possible to reduce the vibration of the speaker units 302A to 302D and thus it is also possible to inhibit an allophone from being generated that results from the vibration transmitted to the vehicle body. Further, as described above, the acoustic characteristics of the low sound range are improved, thereby obtaining the good acoustic characteristics even when the small speaker units 302A to 302D in which the sound pressure of the low sound range is low are utilized. Further, since the sound pressure of a the low sound emitted from the front side of the speaker units 302A to 302D is relatively low, the sound wave emitted from the front side of the speaker units 302A to 302D and the sound wave emitted from the other end 42 of the acoustic tubes of 304A to 304D do not weaken each other easily in the low sound range.

In the speaker system for the mobile object 1C, mainly sound wave of the middle and high sound range is emitted from the front surface of the speaker units 302A to 302D, and mainly sound wave of the low sound range is emitted from the other ends 42 of the acoustic tubes 304A to 304D. While there is a case where the most appropriate emission point of the middle and high sound range and the low sound range differ, an emission point of the middle and high sound range and an emission point of the sound wave of the low sound range are apart, thereby placing each of the emission points at the most appropriate position, and thus it is possible to obtain the extremely good acoustic characteristics.

Further, the speaker units 302A and 302B and the enclosures 303A and 303B are provided in the instrument panel I, and along with that, the acoustic tubes 304A and 304B pass through the inside of the instrument panel I, thereby keeping an appearance good in a case where the speaker system for the mobile object 1C is provided in the vehicle C.

Note that the present invention is not limited to the aforementioned Example, but includes other configurations which can achieve the object of the invention, and the following modifications are also included in the invention.

For example, in the aforementioned Example, the speaker units 302A and 302B in the front side, and the speaker units 302C and 302D in the rear side operate with a time difference so that the node of the standing wave becomes apart from the head positions H1 and H2 in the front side to the rear side, and the time difference may be set appropriately depending on a relationship between a location of the node in a case where there is no time difference and the head positions H1 to H5. For example, when the node is located in the more front side than the head positions H1 and H2 in a case where there is no time difference, the time difference may be something such that the node becomes more apart from the head positions H1 and H2 to the front side of the vehicle C. Further, when the node is located in the vicinity of the head positions H3 to H5 in the rear side in a case where there is no time difference, the time difference may be something such that the node becomes more apart from the head positions H3 to H5 to the front side of the vehicle C. Further, when the vehicle includes one row or more than three rows of seats in the front-back direction, the time difference may be set corresponding to the relationship between the location of the node in a case where there is no time difference, and a head position of the each row. Further, in a case where the head position and the location of the node are distant enough from each other, and in a case where a decrease of the sound pressure by the node is small, the speaker units in the front and the rear of the vehicle C may be operated almost simultaneously without setting such a time difference.

Further, the location of the node concerning the standing wave having the wavelength about the same as the interval of the corners C31 and of the corners C32 is to be changed as viewed from above in the aforementioned Example, but a location of the node concerning a standing wave having a different frequency may also be changed. For example, in the standing wave having about two-thirds of the wavelength of the interval, two nodes are formed between the corners C31 and between the corners C32, and the time difference may be set so that the nodes become more apart from any of the head positions H1 to H5 of respective seats to the front side or the rear side of the vehicle C.

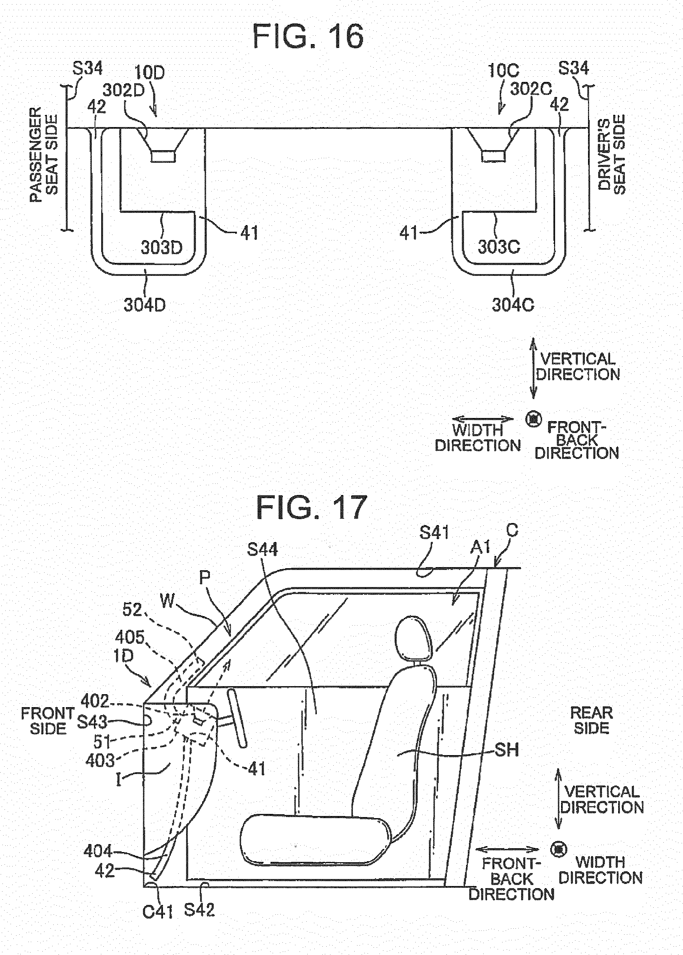

Further, in the speaker devices 10C and 10D provided in the rear side of the vehicle C, the acoustic tube 304C extends toward the passenger seat side from the driver's seat side in the width direction, the acoustic tube 304D extends toward the driver's seat side from the passenger seat side in the width direction, and the acoustic tube 304C and the acoustic tube 304D intersect, as viewed from above in the aforementioned Example, but as illustrated in FIGS. 15 and 16, it may also be configured such that the acoustic tube 304C and the acoustic tube 304D extend toward the rear side in the travelling direction of the vehicle C, and that the acoustic tube 304C and the acoustic tube 304D do not intersect.

Further, the speaker system for the mobile object 1C is installed with the four speaker devices 10A to 10D which are provided at the four corners CR1 to CR4 of the vehicle C as viewed from above in the aforementioned Example, but the speaker system for the mobile object may be installed with at least two speaker devices. For example, two speaker devices may be provided at the corners in the front and the rear of the vehicle C in the front-back direction respectively, or may be provided at the corners in one side and the other side in the width direction respectively.

Further, a shape of a section and a cross sectional area of the acoustic tubes 304A to 304D are substantially constant as viewed from above in the aforementioned Example, but the cross sectional area of the acoustic tubes may be substantially constant and along with that, the shape of the section of the acoustic tubes may be variable. Further, lengths of the acoustic tubes 304A and 304B in the front side and the acoustic tubes 304C and 304D in the rear side are about the same as viewed from above in the aforementioned Example, but these lengths may also be different from one another.

Further, the enclosure 303 as an accommodating unit and the acoustic tube 304 are different members as viewed from above in the aforementioned Example, but it may also be configured such that the enclosure and the acoustic tube are formed integrally. For example, it is mentioned for example that the accommodating unit is a single tubular shaped member, and that this tubular shaped member serves both as the enclosure and the acoustic tube.

Further, frequency characteristics of the sound wave emitted by the speaker unit may be set appropriately. In a case where the sound pressure of the low sound range emitted from the front surface side of the speaker unit is high, when the sound pressure of the low sound which resonates in the acoustic tube and is emitted from the other end is high enough, the sound pressure of the low sound may be secured even when the sound wave from the front surface side and the sound wave from the other end weaken each other. That is, in a case where the sound pressure of low sound improves sufficiently by resonance in the acoustic tube, the speaker unit which emits the sound wave such that the sound pressure from the low sound range to the middle and high range about the same, or the speaker unit which emits the sound wave such that the sound pressure of the low sound range becomes higher than that of the middle and high range may be used, unit (a tweeter) for the middle and high range may be used. Further, a shape of the speaker unit is not specifically limited, and it may be a corn type or a dome type.

Further, the sound wave is emitted from the front surface side of the speaker units 302A and 302B in the front side on the upper surface of the instrument panel I as viewed from above in the aforementioned Example, however, the speaker unit may emit the sound wave from the front surface side of the speaker unit, for example, on the lower surface of the instrument panel I (a surface opposed to the driver's seat). Further, the speaker units 302A and 302B are provided in the instrument panel I as viewed from above, but it may also be configured such that the speaker units are provided outside the instrument panel I (for example, placed on the upper surface of the instrument panel I). At this time, the acoustic tube may be provided running along the outside of the instrument panel I without passing through the inside. According to this kind of configuration, when additionally installing the speaker system for the mobile object to the vehicle, it is possible to facilitate installation.

Further, the other ends 42 of the acoustic tubes 304A to 304D open toward the corners C31 and C32 where the three surfaces intersect as viewed from above in the aforementioned Example, but the other end may open toward the intersection part (R13 to R38 illustrated in FIG 10) where two out of the plurality of surfaces surrounding the room space of the vehicle A1 (the inner surface of the windshield W, the upper surface S31, the lower surface S32, the front surface S33, a pair of the sides S34, and the rear surface 35) intersect, or may not open toward the intersection part. Further, the other ends 42 of the acoustic tubes 304C and 304D in the rear side may open toward a corner C33 where the rear surface S35, the upper surface S31, and the side S34 of the vehicle C intersect. Note that, an intersection part R31 is an intersection part where the front surface S33 and the lower surface S32 of the vehicle C intersect, an intersection part R32 is an intersection part where the lower surface S32 and the side S34 of the vehicle C intersect, an intersection part R33 is an intersection part where the front surface S33 and the side S34 of the vehicle C intersect, an intersection part R34 is an intersection part where the rear surface S35 and the lower surface S32 of the vehicle C intersect, an intersection part R35 is an intersection part where the rear surface S35 and the side S34 of the vehicle C intersect, an intersection part R36 is an intersection part where the front surface S33 and the upper surface S31 of the vehicle C intersect, an intersection part R37 is an intersection part where the upper surface S31 and the side S34 of the vehicle C intersect, and an intersection part R38 is an intersection part where the rear surface S35 and the upper surface S31 of the vehicle C intersect.

Further, the standing wave is formed between the corners C31 and the corners C32 which are opposed to each other in not only in the front-back direction but also in the width direction (that is obliquely) as viewed from above in the aforementioned Example, but in a case where the other end 42 opens toward the intersection part, the standing wave may also be formed between the intersection parts opposed to each other only in the front-back direction. In this case, concerning the standing wave having the wavelength corresponding to the interval between the intersection parts opposed to each other in the front-back direction, the node may be transferred.

### Example 4

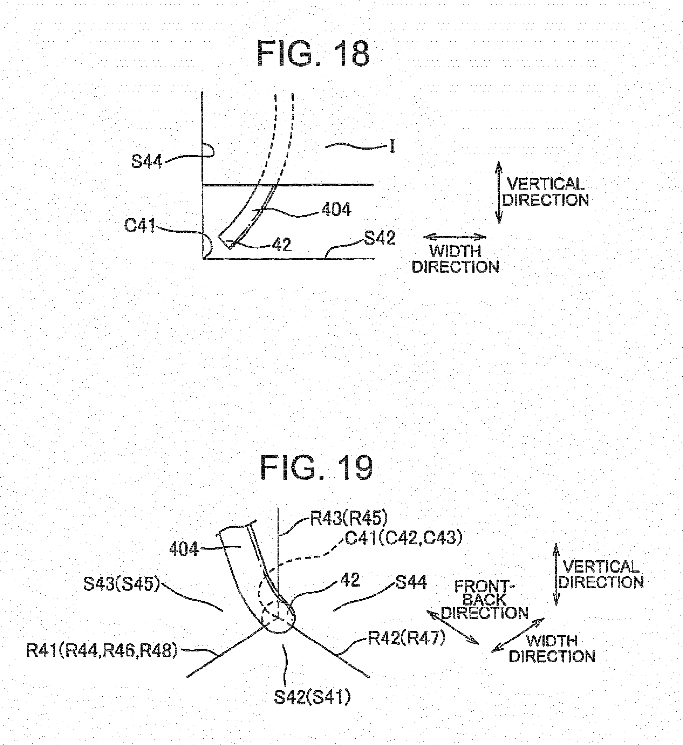

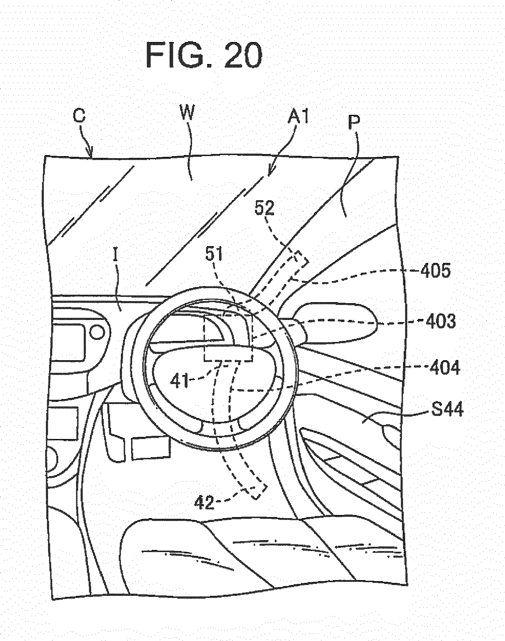

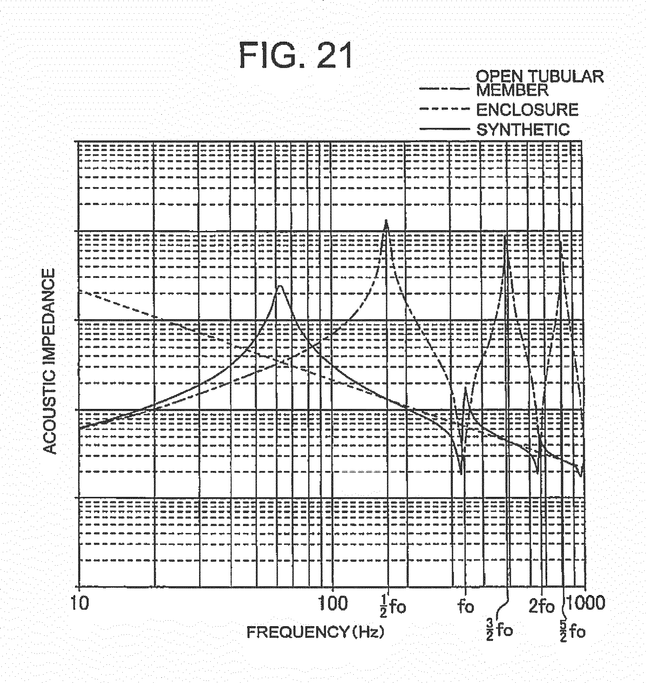

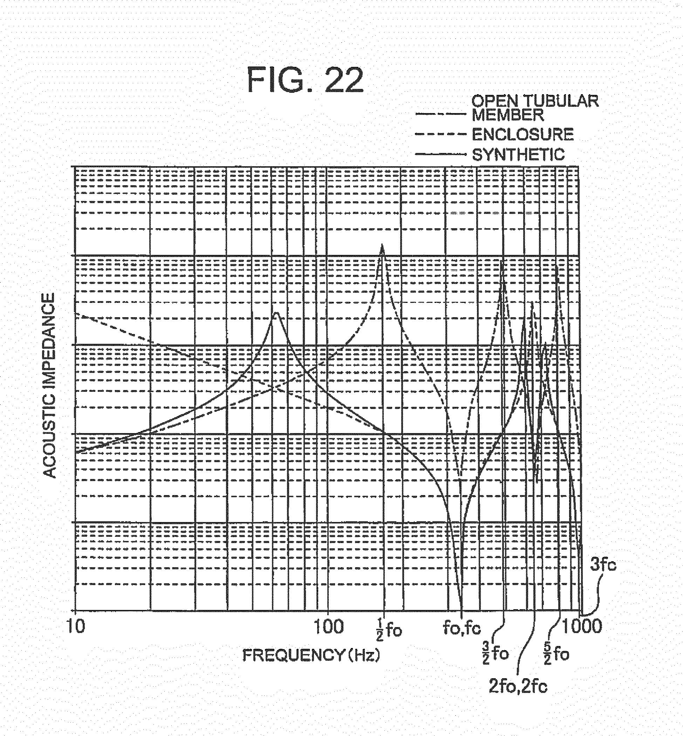

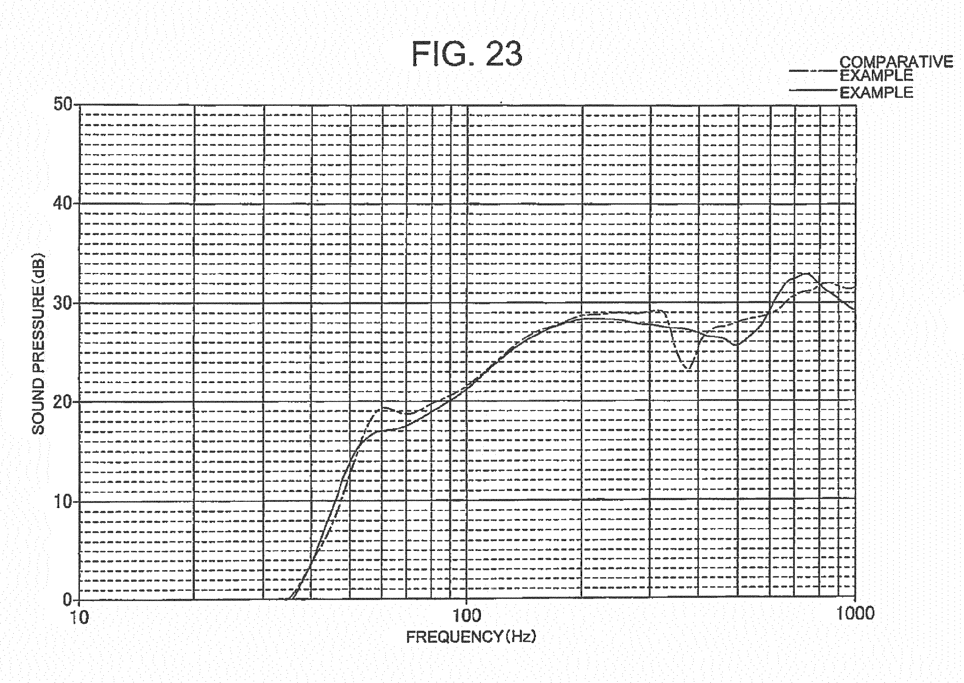

Example 4 of the present invention will specifically be described below. FIG 17 is a side view illustrating a vehicle C provided with a speaker system for a mobile object 1D according to Example 4 of the present invention, FIG 18 is a front view illustrating a main portion of an acoustic tube 404 of the speaker system for the mobile object 1D, FIG 19 is a perspective view illustrating the acoustic tube 404, FIG20 is a perspective view illustrating a state where the vehicle C is provided with the speaker system for the mobile object 1D, FIG21 is a graph showing frequency characteristics of an acoustic impedance of the speaker system for the mobile object according to a comparative example, FIG22 is a graph showing the frequency characteristics of the acoustic impedance of the speaker system for the mobile object 1D according to Example, and FIG23 is a graph showing the frequency characteristics of sound pressure of the speaker system for the mobile object according to Example and the comparative example.

As illustrated in FIG 17, the speaker system for the mobile object 1D is installed in the vehicle C as a mobile object and includes a speaker unit 402, an enclosure 403 as an accommodating unit to accommodate the speaker unit 402, the acoustic tube 404 connected to the enclosure 403, and a closed tubular member 405 connected to the enclosure 403.

The vehicle C forms a box-shaped room space of the vehicle A1 surrounded by an inner surface of a windshield W, an upper surface (a top surface) S41 of a vehicle body, a lower surface S42, a front surface S43 in a travelling direction of the vehicle C, and a pair of sides S44 (including a door body of the vehicle) opposed to each other in a width direction, and a not shown rear surface in the travelling direction of the vehicle C. Further, an instrument panel I is provided on the front surface S43, and seats (a driver's seat and a passenger seat) SH are provided opposed to the rear side of the instrument panel I. In the present Example, the speaker system for the mobile object 1D are supposed to be provided in the front side of the driver's seat, but may also be provided in the front side of the passenger seat, or may also be provided in both.

The speaker unit 402 includes a vibration plate, a voice coil supported by the vibration plate, an edge which connects the vibration plate to a frame, a magnetic circuit which drives (vibrates) the voice coil, the frame which connects the voice coil to the frame, and a damper which suppresses a natural vibration of the vibration plate. The speaker unit 402 may emit a sound wave such that the sound pressure of a middle and high sound range (for example, 1,000 Hz to 10,000 Hz) becomes higher than that of a low sound range (for example, 10 Hz to 1,000 Hz). Further, the vibration plate is provided with a side from which the speaker unit 402 emits the sound wave (the front surface side) facing an upper part of the vehicle C and also with the magnetic circuit side (the back side) facing a lower part of the vehicle C. Further, the speaker unit 402 may be provided on the instrument panel I so that a vibration direction (or a sound emission direction) of the vibration plate of the speaker unit 402 inclines at a predetermined degree (for example, 30 degrees) against the upper surface of the instrument panel I. Note that in a case where the speaker unit is installed in the instrument panel in a state where the vibration plate is inclined against the upper surface of the instrument panel I, an angle of inclination of the vibration plate against the upper surface of the instrument panel I may be set appropriately as necessary according to an angle of the windshield W and a distance between the speaker unit 402 and the seat SH or the like, and in such a case, a central axis or the vibration plate of the speaker unit 402 may not have to be inclined. In a case where the central axis or the vibration plate of the speaker unit 402 is not made to incline, the speaker unit 402 may be installed so that the vibration plate is placed along the upper surface of the instrument panel I. Further, the central axis or the vibration plate of the speaker unit 402 may be directed to the driver's seat or the passenger seat.

The enclosure 403 includes the upper surface, a bottom surface, and four sides, and is formed in a box-shape. The enclosure 403 is provided in the instrument panel I, on the top surface of which a frame that supports the vibration plate is installed, and has the speaker unit 402 placed in an internal space thereof formed by the bottom surface and the four sides, and thus accommodating therein a part in the back side of the speaker unit 402. Further, the enclosure 403 may be provided on the top surface having an inclined surface inhibiting the sound wave emitted by the vibration plate from reflecting on a part of the enclosure 403, and also letting the sound wave be emitted in the room space of the vehicle A1. Further, the enclosure 403 is provided in the vicinity of the side S44 in the width direction. The speaker unit 402 is accommodated in the enclosure 403 like this, thereby being provided in the instrument panel I to emit the sound wave from the front side on the upper surface of the instrument panel I. Further, the sound wave generated at the back side of the speaker unit 402 is emitted toward the internal space the enclosure 403.

The acoustic tube 404 is formed in a cylindrical shape having both its ends opened, using known metal, resin or the like, and one end 41A of which is linked to the lower surface of the enclosure 403 as the back side of the speaker unit 402, and also the other end 42 of which is placed in a foot part of the driver's seat (the vicinity of an accelerator pedal). A shape of a section and a cross sectional area of the acoustic tube 404 are substantially constant from the one end 41 side to the other end 42 side, and as described later, a length of which is formed such that the acoustic tube 404 includes resonance frequency (for example, 30 Hz to 100 Hz) corresponding to a standing wave formed in the room space of the vehicle A1. The one end 41 of the acoustic tube 404 is linked to the bottom surface of the enclosure 403, thereby connecting the acoustic tube 404 with the internal space of the enclosure 403 at the one end 41. As illustrated in FIGS. 18 and 19, the other end 42 opens toward the room space of the vehicle A1, facing a corner C41 where the front surface S43, the lower surface S42, and the side S44 in the driver's seat side intersect at the lower part of the instrument panel I.

The acoustic tube 404 passes through the inside of the instrument panel I on the one end 41 side, and is protruding to the outside of the instrument panel I on the other end 42 side. Further, from the one end 41 to the other end 42 in the width direction, the acoustic tube 404 extends to get apart once from the side S44 in the driver's seat side, and then extends as to come near the side S44 again. That is, when being looked at in a front-back direction (the travelling direction of the vehicle C), the acoustic tube 404 has a bending shape which is bulging out convexly toward the passenger seat side. Further, the acoustic tube 404 extends so as to be directed toward the front side as approaching to the other end 42 from the one end 41 in the front-back direction. Further, the acoustic tube 404 is, the same as Example 1, configured of a pillar, a side sill, a reinforcement, a cross member or the like at least a portion of which configures a vehicle body 11.

The closed tubular member 405 using appropriate metal, resin or the like, having one end 51 opened and also the other end 52 closed, is formed in a cylindrical shape, and the one end 51 of which is linked to a surface facing the front side in the travelling direction of the vehicle C out of the sides of the enclosure 403, and also, the other end 52 of which is placed inside a pillar P of the vehicle C. A shape of a section and a cross sectional area of the closed tubular member 405 are substantially constant from the one end 51 side to the other end 52 side. A length of the closed tubular member 405 is, as described later, approximately half of a length of the acoustic tube 404 and the closed tubular member 405 in consideration of an open end correction. Note that, in a case where the standing wave is formed in the acoustic tube 404 and the closed tubular member 405, an opening of which becomes a free end and then an antinode, the antinode is located slightly outer side than an opening end, and a deviation of a location of the end and that of the antinode is called the open end correction. Note that, in a case where the standing wave is formed in the acoustic tube 404 and the closed tubular member 405, an opening of which becomes a free end and then an antinode, the antinode is located slightly outer side than an opening end, and a deviation of a location of the end and that of the antinode is called the open end correction. The one end 51 of the closed tubular member 405 is linked to the front surface of the enclosure 403, thereby connecting the closed tubular member 405 with the internal space of the enclosure 403 at the one end 51. The closed tubular member 405 extends from the one end 51 toward the side S44 (that is, the door body) side in the driver's seat side passing through the inside of instrument panel I, goes into inside the pillar P, and also extends along the pillar P. Thus, it is possible to plan to downsize the enclosure 403, utilizing the internal space inside the pillar P.

An advance and a reflection of the sound wave when the speaker unit 402 emits the sound wave in the above mentioned speaker system for the mobile object 1D will be described. First, the sound wave emitted from the front surface side of the speaker unit 402 to a diagonal rear side corresponding to an inclination of the vibration plate, and heads to the vicinity of a headrest of the driver's seat (a head part of the driver). Note that the sound wave emitted from the front surface side may be reflected on the windshield W and the upper surface (the top surface) S41 and head to the headrest.

The sound wave generated at the back side of the speaker unit 402 echoes in the internal space of the enclosure 403, and along with that, enters the inside of the acoustic tube 404 from the one end 41, and advances in the acoustic tube 404. At this time, the component of the low sound range corresponding to the length of the acoustic tube 404 and the closed tubular member 405 among the sound waves generated at the back side of the speaker unit 402 resonates in the acoustic tube 404. Therefore, the sound wave constituted mainly of the component of the low sound range is emitted from the other end 42 of the acoustic tube 404. In other words, the component of the middle and high sound range of the sound wave emitted from the other end 42 of the acoustic tube 404 has been cut. Specifically, "being cut" means that the sound pressure of the component of the middle and high sound range becomes lower than that of the component of the low range. The sound wave emitted from the other end 42 is reflected on the corner C41 and the surrounding surfaces S42 to S44, advances toward an opposed corner (a corner where the upper surface S41, the rear surface, and the side in the passenger seat side intersect) opposed to the corner C41, is reflected again on the opposed corner and the surrounding surfaces, and advances toward the corner C41. Thus, the standing wave having the wavelength which corresponds to a distance between the corner C41 and the opposing corner is formed by the sound wave heading to the opposed corner from the corner C41 and the sound wave heading to the corner C41 from the opposing corner. The frequency of the standing wave and the resonance frequency of the acoustic tube 404 almost correspond, and the low sound amplified by the acoustic tube 404 and emitted from the other end 42 forms the standing wave in the room space of the vehicle A1. As described above, since the acoustic tube 404 has the resonance frequency corresponding to the standing wave formed in the room space of the vehicle A1, a component resonated among the sound waves emitted from the other end 42 forms the standing wave.

Further, the sound wave which was generated at the back side of the speaker unit 402 and echoed in the internal space of the enclosure 403 also goes into the inside of the closed tubular member 405 from the one end 51. The sound wave which went into the inside of the closed tubular member 405 from the one end 51 advances toward the other end 52 side, develops an fixed end reflection on the closed other end 52 and advances to the one end 51 side. Therefore, a travelling wave heading to the other end 52 and a reflected wave advancing heading to the one end 51 strengthen each other and weaken each other.

The sound wave is emitted as mentioned above, thereby echoing the sound wave having the component constituted mainly of the middle and high sound range emitted from the front surface side of the speaker unit 402 and the sound wave constituted mainly of the component of the low sound range emitted from the other end 42 of the acoustic tube 404 in the room space of the vehicle A1.

Here, the acoustic characteristics of the speaker system for the mobile object 1D in Example will be described specifically below referring also to the speaker system for the mobile object of the comparative example. First, phase characteristics of an acoustic impedance are obtained by a simulation, concerning the speaker system for the mobile object 1D in the comparative example and Example. At this time, conditions of calculation are as follows. That is, in the speaker system for the mobile object as viewed from above in the comparative example, the speaker unit is accommodated in the box-shaped enclosure having a capacity (volume of the internal space) of one liter, and on the enclosure, the acoustic tube of the length of 500 mm on which the open end correction is considered is connected to the side opposed to the back side of the speaker unit and the closed tubular member is not provided therein. On the other hand, in the speaker system for the mobile object 1D as viewed from Example, the acoustic tube 404 having the length of 500 mm on which the open end correction is considered and the closed tubular member 405 having the length of 250 mm and the capacity of one liter are connected, and this connecting part accommodates the speaker unit functioning as an enclosure, and a capacity of the enclosure 403 is small enough.

In the speaker system for the mobile object in the comparative example, the frequency-dependency of the acoustic impedance as illustrated in FIG 21 was obtained. A horizontal axis in FIG 21 indicates a frequency displayed logarithmically, and a vertical axis indicates the acoustic impedance displayed logarithmically. As illustrated with a broken line, the acoustic impedance only of the enclosure monotonically decreased along with an increase of the frequency. On the other hand, as illustrated with a dashed line, the acoustic impedance of the acoustic tube alone indicated the minimum value on an integral multiple of n times (n ≧ 1) of a frequency fo (about 340 Hz) of the fundamental vibration in the natural vibration, and the maximum value was indicated in -fo/2+nfo. That is, the maximum value and the minimum value were repeatedly indicated in every fo/2.

A synthetics acoustic impedance (the acoustic impedance of the entire speaker system for the mobile object) of the enclosure and the acoustic tube in the comparative example indicated, as shown with a solid line, the maximum value at about 61 Hz, the minimum value at about 320 Hz, the maximum value at about 340 Hz, and then the minimum value and the maximum value repeatedly. Further, it is considered that the maximum value at about 61 Hz is caused by the maximum value at fo/2 of the acoustic tube, the minimum value at about 320 Hz is caused by the minimum value at fo of the acoustic tube, and the maximum value at about 340 Hz is caused by the maximum value at 3fo/2 of the acoustic tube.

In the speaker system for the mobile object in Example, the frequency-dependency of the acoustic impedance as illustrated in FIG 22 was obtained. The horizontal axis and the vertical axis in FIG22 are the same as the ones in FIG 21. As illustrated with a dashed line, the acoustic impedance of the closed tubular member alone indicated the minimum value at an odd number k times (k ≧ 1) of a frequency fc (about 340 Hz) of the fundamental vibration in the natural vibration and indicated the maximum value at an even number m times (m ≧ 2) of the fc. That is, the maximum value and the minimum value were repeatedly indicated in every fc. The acoustic impedance of the acoustic tube became the same as that of the comparative example.

In the speaker system for the mobile object in Example, the frequency fo of the fundamental vibration in the acoustic tube and the frequency fc of the fundamental vibration of the closed tubular member became almost the same. Further, the frequency 2 fo of a double vibration of the acoustic tube became almost the same as the intermediate frequency 2 fc between the fundamental vibration in the closed tubular member and a triple vibration. That is, at the frequency 2fo (2fc), the acoustic impedance of the acoustic tube indicated the maximum value, and the acoustic impedance of the closed tubular member indicated the minimum value.

Since the acoustic impedance of the closed tubular member showed the aforementioned characteristics, as shown with a solid line, the synthetics acoustic impedance in Example showed different characteristics from the synthetic acoustic impedance in the comparative example. That is, the synthetic acoustic impedance in Example indicated the maximum value at about 61 Hz, the minimum value at about 340 Hz (fo, fc), the maximum value at about 600 Hz, the minimum value at about 680 Hz, the maximum value at about 740 Hz, and then the minimum value and the maximum value were repeatedly indicated similarly thereafter. Further, it is considered that the maximum value at about 61 Hz is caused by the maximum value at fo/2 of the acoustic tube, the minimum value at about 340 Hz is caused by the minimum value at fo and fc of the acoustic tube and the closed tubular member, the maximum value at about 600 Hz is caused by the maximum value at 3fo/2 of the acoustic tube and the maximum value at 2fc of the closed tubular member, the minimum value at about 680 Hz is caused by the minimum value at 2 fo of the acoustic tube, and the maximum value at about 740 Hz is caused by the maximum value at 5fo/2 of the acoustic tube and the maximum value at 2fc of the closed tubular member.

It is considered that in the synthetic acoustic impedance of Example, since the maximum value and the minimum value overlap at the frequency 2fo(2fc), the maximum value at about 340 Hz of the synthetic acoustic impedance of the comparative example shifted to a high frequency side.

The frequency characteristics (sound pressure characteristics) of the sound pressure of the speaker system for the mobile object in Example and the comparative example are shown in FIG 23. The sound pressure characteristics of the speaker system for the mobile object in the comparative example, as illustrated with a dashed line, the minimum value was indicated at about 380 Hz. It is considered that this is caused by the maximum value at about 340 Hz of the synthetics acoustic impedance. On the other hand, since the maximum value at about 340 Hz as the comparative example of the synthetics acoustic impedance is shifted to the high-frequency side, the sound pressure characteristics of the speaker system for the mobile object in Example did not indicate the minimum value at around 380 Hz, but gradually changed.

Therefore, since the closed tubular member is provided and also the length is set as mentioned above, in the speaker system for the mobile object in Example, it is possible to inhibit the sound pressure from decreasing at a specific frequency. Further, in the speaker system for the mobile object in the comparative example, when attempting to inhibit the sound pressure around 380 Hz from decreasing, it is necessary to correct an input signal to the speaker unit, while in the speaker system for the mobile object in Example, the sound pressure hardly changes around 380 Hz, and without correcting the input signal, it is possible to obtain good acoustic characteristics.

According to the above configuration, since the one end 51 of the closed tubular member 405 is connected to the enclosure 403 accommodating the back side of the speaker unit 402, not only the capacity of the enclosure 403, but also a capacity of the closed tubular member 405 can be utilized as a capacity of the speaker unit 402 on the back side, and it is possible to downsize the enclosure 403 while securing the capacity of the speaker unit 402 on the back side. At this time, the closed tubular member 405 has a high flexibility in installation, and the other end 52 side is provided in the pillar, thereby utilizing a free space in the mobile object C effectively. By downsizing the enclosure 403, and along with that, by placing the closed tubular member 405 utilizing a free space, the speaker system for the mobile object 1D may be easily provided on the mobile object C.

Further, since the other end 42 of the acoustic tube 404 opens facing the corner C41 where three of a plurality of surfaces surrounding the room space of the vehicle A1 intersect, a low sound emitted from the other end 42 reflects on the three surfaces and easily echoes in the room space of the vehicle A1, thereby improving the acoustic characteristics of the low sound range in the speaker system for the mobile object 1D.

Further, in a case where the speaker unit 402 emits the sound wave such that the sound pressure of the middle and high sound range becomes higher than that of the low sound range, it is possible to reduce amplitude of the voice coil or the vibration plate of the speaker unit 402, and thus it is also possible to inhibit an allophone from being generated that results from the vibration transmitted to the vehicle body. Further, since the sound pressure of the low sound emitted from the front side of the speaker unit 402 is relatively low, the sound wave emitted from the front side of the speaker unit 402 and the sound wave emitted from the other end 42 of the acoustic tube 404 do not weaken each other easily in the low sound range.

In the speaker system for the mobile object 1D, mainly the sound wave of the middle and high sound range is emitted from the front surface of the speaker unit 402, and mainly the sound wave of the low sound range is emitted from the other end 42 of the acoustic tube 404. There is a case where the most appropriate emission point of the middle and high sound range and the low sound range differ, an emission point of the middle and high sound range and an emission point of the sound wave of the low sound range are apart, thereby placing each of them at the most appropriate position, and thus it is possible to obtain the extremely good acoustic characteristics.

Further, since the other end 42 of the acoustic tube 404 opens facing the corner C41, the standing wave is formed between the corner C41 and the opposed corner by the sound wave emitted from the other end 42. At this time, since a distance between the corner C41 and the opposed corner is longer than a distance between a pair of surfaces opposed to each other (the upper surface S41 and the bottom surface S42, the front surface S43 and the rear surface, and a pair of the sides S4), it is possible to form the standing wave having a long wavelength, and it is also possible to echo the low sound effectively in the room space of the vehicle A1.

Further, the speaker unit 402 and the enclosures 403 are provided in the instrument panel I, and along with that, the acoustic tube 404 passes through the inside of the instrument panel I, thereby keeping an appearance good in a case where the speaker system for the mobile object 1D is provided in the vehicle C.

Note that the present invention is not limited to the aforementioned Example, but the invention includes other configurations which can achieve the object of the invention, and the following modifications are also included in the invention.

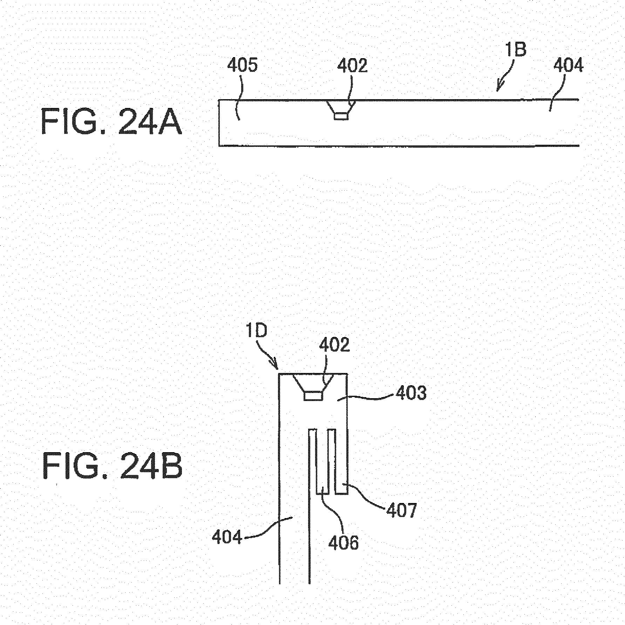

For example, as viewed from above in the aforementioned example, the acoustic tube 404 and the closed tubular member 405 are connected to the box-shaped enclosure 403, but the enclosure and the acoustic tube or the closed tubular member may be formed integrally. For example, the acoustic tube and the closed tubular member may be formed by a single tubular shaped member, and the speaker unit may be accommodated in a part (an interstitial part) of the tubular shaped member. Further, as illustrated in FIG. 24A with a first modification, a speaker system for the a mobile object 1D may have the speaker unit 402 accommodated in a single tubular shaped member with one end opened and the other end closed. In the speaker system for the mobile object 1D, viewed from the speaker unit 402, the acoustic tube 404 is located an open end side (right side in the diagram), the closed tubular member 405 is located in a closed end side (left side in the diagram), and a boundary part between the acoustic tube 404 and the closed tubular member 405 becomes the accommodating unit. That is, the acoustic tube 404, the closed tubular member 405, and the accommodating unit are formed integrally into a single tubular shape. According to this kind of configuration, it is possible to reduce the number of parts comparing with a configuration such that the accommodating unit and the acoustic tube or the closed tubular member are formed separately.

Further, in the aforementioned Example, a single closed tubular member 405 is connected to the enclosure 403, but the configuration may also be such that the plurality of closed tubular members are connected to the enclosure 403. For example, as illustrated in FIG 24B as a third modification, the speaker system for the mobile object 1D may have two closed tubular members 406 and 407 connected to the enclosure 403. According to this kind of configuration, it is possible to utilize a capacity of both of the two closed tubular members 406 and 407 as a capacity of the back side of the speaker unit 402. Therefore, in the vehicle, when there are small free spaces at two places respectively, it is possible to place the closed tubular members 406 and 407 therein respectively, even when there is no large free space at one place, and thus it is possible to improve a flexibility in installation to the vehicle even more while securing the capacity of the back side of the speaker unit 402.

Further, the speaker unit 402 and the enclosure 403 are provided in the instrument panel I in the aforementioned example, but the speaker unit 402 and the enclosure 403 may also be provided in other places.

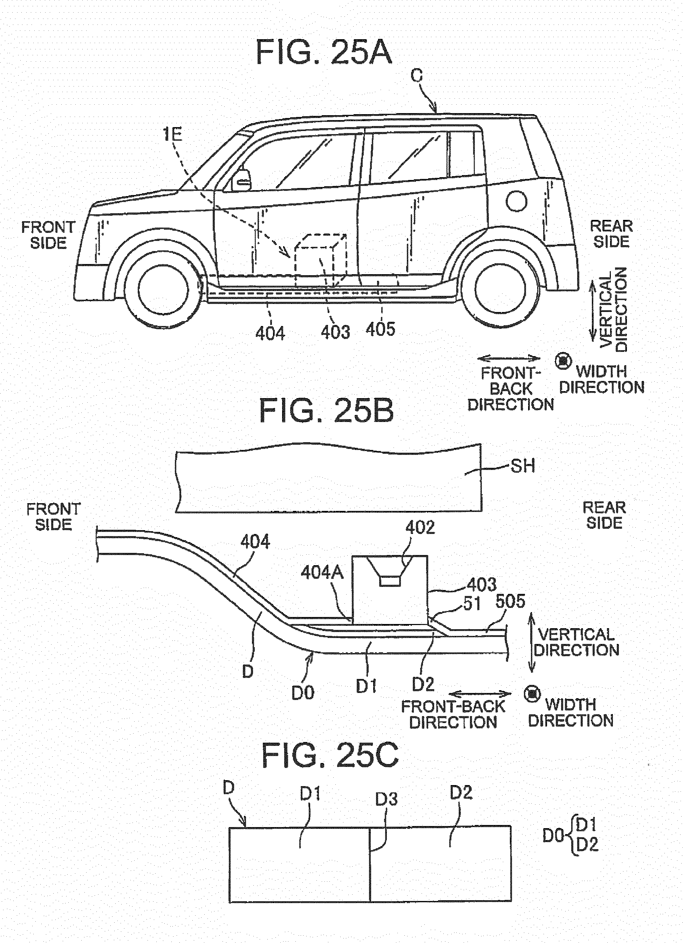

For example, as illustrated in FIG 25 as a fourth modification, the speaker unit 402 and the enclosure 403 may be a speaker system for a mobile object 1E that is provided at the lower part of the seat SH of the vehicle C. An air-conditioning duct D is provided in the vehicle C installed with the speaker system for the mobile object 1E. The air-conditioning duct D extends along in a front-back direction in order to send cold air or warm air from an air conditioner provided in the front side (for example, in the instrument panel I) to a foot part of a back seat, and as illustrated in FIG 25C, includes a tubular shaped passage part D0. The passage part D0 includes a first passage D1 and a second passage D2 through which the cold air or the warm air passes through by being divided by a partition portion D3. The second passage D2 was provided, for example, for reinforcing the first passage D1.

The acoustic tube 404 of the speaker system for the mobile object 1E extends toward the front side of the one end 41 connected to the front surface of the enclosure 403, is connected to the second passage D2, extends toward the front side with the second passage D2 functioning as the acoustic tube, becomes separate from the second passage D2 on the one end side, and opens facing an intersection part or the corner in the front side. That is, a portion between the one end 41 of the acoustic tube 404 and the other end are formed integrally with the air-conditioning duct D. Further, the closed tubular member 405 has one end 51 connected to the rear side of the enclosure 403, extends toward a rear side, is connected to the second passage D2 independently from the acoustic tube 404, the second passage D2 of which functions as the closed tubular member and extends toward the rear side, and the not-shown other end of which is closed. Note that, the configuration may be made such that the second passage D2 is not formed in the air-conditioning duct D, and a portion of the acoustic tube 404 and the closed tubular member 405 are formed integrally with the first passage D1.

According to the speaker system for the mobile object 1E in the fourth modification, it is possible to reduce a cost by utilizing the air-conditioning duct D as the acoustic tube 404 and the closed tubular member 405, and also to utilize a space formed in the vehicle C in order to let the air-conditioning duct D pass through. Further, even when an installation space for the speaker unit 402 at the lower part of the seat SH is small, the other end of the acoustic tube 404 opens facing toward the corner or the intersection part, thereby improving acoustic characteristics of sound pressure of the low sound range or the like.

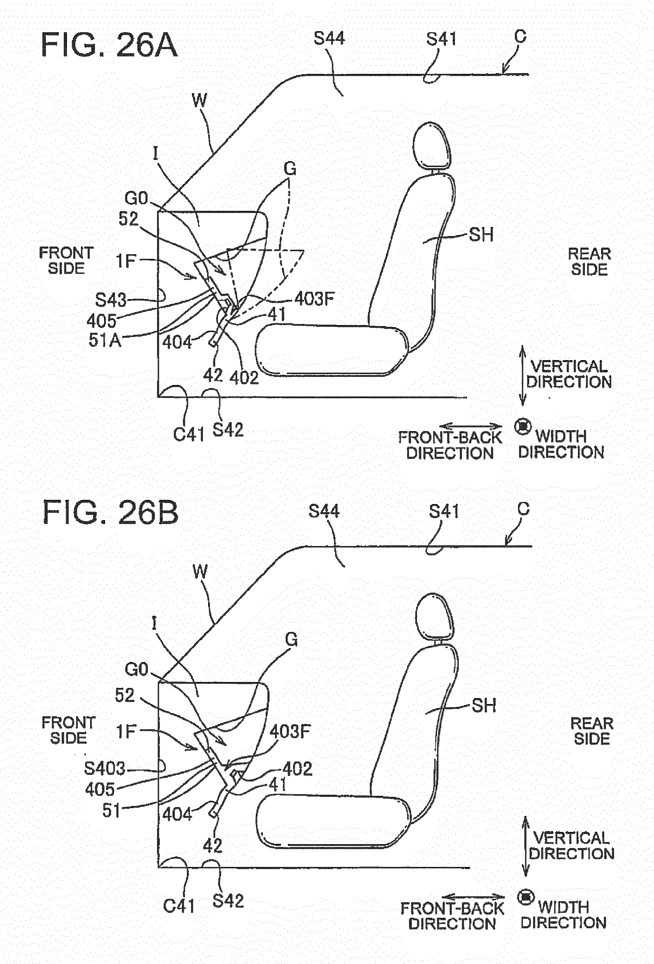

Further, as illustrated in FIG 26A as a fifth modification, the speaker unit 402 and an enclosure 403F is used as a speaker system for a mobile object 1F formed as a part of a glove compartment G as a box part provided in the instrument panel I of the vehicle C. A rotary shaft is provided in the instrument panel I of the vehicle C installed with the speaker system for the mobile object 1F along a width direction, and the glove compartment G is provided such that an internal part is openable and closable (illustrated with a two-dot chain line) by rotating in a rotating direction of the rotary shaft. A space at the lower side of the glove compartment G is partitioned from the other portion G0 (a space capable of accommodating an accommodated article), thereby forming the enclosure 403F. The speaker unit 402 has the front surface face the outside of the glove compartment G, and is accommodated in the enclosure 403F with the front surface facing the front side and the lower side. In the acoustic tube 404, the one end 41 is connected to the lower side of the enclosure 403F, and the other end 42 opens facing the corner C41. The closed tubular member 405 has the one end 51 connected to a portion located in the upper side and the front side in the vehicle C, of the enclosure 403F for example, and is accommodated in the glove compartment G with.

Note that the other end 42 of the acoustic tube 404 may open facing the intersection part where the front surface S43 and the lower surface S42 intersect. Further, as illustrated in FIG 26B, the front surface of the speaker unit 402 may be facing the rear side in a travelling direction of the vehicle C. Further, the enclosure 403F may be formed in the existing glove compartment G installed in the vehicle C and the speaker unit 402 may be accommodated therein, or the glove compartment G which is provided with the speaker system for the mobile object 1F beforehand may also be manufactured. Further, it may also be configured such that a closed space or a sealed space which is formed when the glove compartment G is not partitioned into a plurality of spaces and is closed functions as the enclosure. Further, the closed tubular member 405 may be connected to an appropriate location of the enclosure 403F and along with that, may extend in an appropriate direction.

According to the speaker system for the mobile object 1F in the fifth modification, the enclosure 403F is a part of the glove compartment G, thereby turning the other end of the acoustic tube 404 easily to the corner C41. Further, even when the speaker unit 402 is downsized to inhibit the space in the glove compartment G from getting smaller, the acoustic tube 404 and the other end 42 open toward the corner C41 or the intersection part, thereby improving the acoustic characteristics of the sound pressure of the low sound range or the like. Further, the closed tubular member 405 may be placed outside the glove compartment G, and according to this kind of configuration, it is possible to secure the capacity in the back side of the speaker unit 402, and at the same time, to inhibit the space in the glove compartment G from getting smaller.

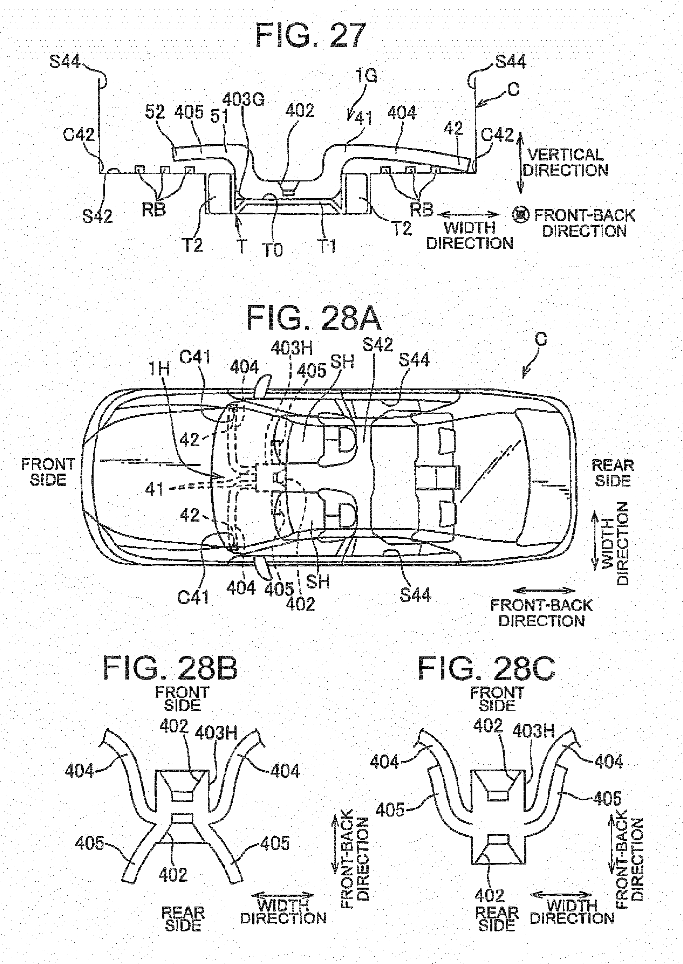

Further, as illustrated as a sixth modification in FIG 27, the speaker unit 402 and the enclosure 403G may be as a speaker system for a mobile object 1G provided inside a wheel T1 of a spare tire T accommodated in the room space of the vehicle A1. The spare tire T, for example, is accommodated in a tire accommodating unit formed in the rear side in the travelling direction of the vehicle C, and includes the wheel T1 and a tire T2. The wheel T1 has a concave portion T0 formed on a side facing width-direction inside when used for being attached to the vehicle C. An inner peripheral surface of the concave portion T0 is formed in a cylindrical shape and an outer peripheral dimension of the enclosure 403G is formed in a cylindrical shape and with a about the same or slightly smaller size than the concave portion. The enclosure 403G is accommodated in the concave portion T0.

Further, a height of the enclosure 403G is larger than a depth of the concave portion T0, an portion of the enclosure 403G (the lower part) is accommodated in the concave portion T0, and the other portion (an upper portion) is protruding from the concave portion T0. Note that, in a vertical direction of the vehicle C, it may also be configured such that the entire enclosure 403G is accommodated in the concave portion T0. The one end 41 of the acoustic tube 404 and the one end 51 of the closed tubular member 405 are each connected to the enclosure 403G The other end 42 of the acoustic tube 404 open toward the corner C42 where one of the sides S44, the lower surface S42, and the rear surface intersect in the vehicle C, but it may also open toward a corner where the side S44, the upper surface, and the rear surface intersect, or open toward a corner where the rear surface and other surfaces (the side S44, the lower surface S42 or the upper surface) intersect. The closed tubular member 405 extends toward the other side S44 side. Note that, on a surface of the lower surface S42 of the vehicle, a ruggedness is formed by a rib RB for reinforcement which extends in the front-back direction or in the width direction, and a tabular cover portion may be provided on the surface. A gap formed between the ruggedness and the cover portion may be utilized as the acoustic tube or the closed tubular member.

According to the speaker system for the mobile object 1G in the sixth modification, even when the speaker unit 402 is downsized in order to accommodate the concave portion T0 of the spare tire T, the other end 42 of the acoustic tube 404 opens toward the corner C42 or the intersection part, thereby improving the acoustic characteristics of the sound pressure of the low sound range or the like. Further provision of the closed tubular member 405 allows to secure volume at the rear side of the speaker unit 402.

Further, as illustrated as a seventh modification in FIG 28A, the speaker unit 402 and the enclosure 403H may be a speaker system for a mobile object 1H provided in a central part in the width direction. The speaker unit 402 and the enclosure 403H are provided between and at the lower parts of the two seats SH in the front side, and the one ends 41 of the two acoustic tubes 404 are connected to the front surface of the enclosure 403H, and along with that, the closed tubular members 405 are connected to both sides in the width direction. One of the two open tubular members 404 extends to a right side in the travelling direction, and the other extends to a left side, that is, the two extend toward an opposite side of each other in the width direction. Further, the other ends 42 of the two open tubular members 404 open toward the corners C41 in the right and the left respectively. The closed tubular member 405 is supposed to extend along the width direction, but a position where the closed tubular member 405 is connected to the enclosure 403H and an extending direction may be set appropriately.

Note that, the other end 404 of the acoustic tube 42 may open toward the intersection part where the side S44 and the lower surface S42 of the vehicle C intersect. Further, as illustrated in FIG 28B, it may also be configured such that the two speaker units 402 are accommodated in the enclosure 403F, one of the speaker units 402 emits the sound wave to the front side, and the other speaker unit 402 emits the sound wave to the rear side. According to this kind of configuration, it is possible to inhibit the sound waves emitted from the back side of the two speaker units 402 from weakening each other, and also the enclosure 403 from vibrating when emitting a sound.

According to the speaker system for the mobile object 1H in the seventh modification, it is possible to utilize a space between and under the two seats SH in the front side. Further, even when an installation space in this space is small, since the other end 42 of the acoustic tube 404 opens toward the corner C41 or the intersection part, it is possible to improve the acoustic characteristics of the sound pressure of the low sound range or the like. Further, the closed tubular member 405 is provided, thereby securing the capacity on the back side of the speaker unit 402. Further, the low sound emitted from the other end 42 of the acoustic tube 404 echoes on both sides in the width direction, thereby making reproduced sound powerful for a passenger.

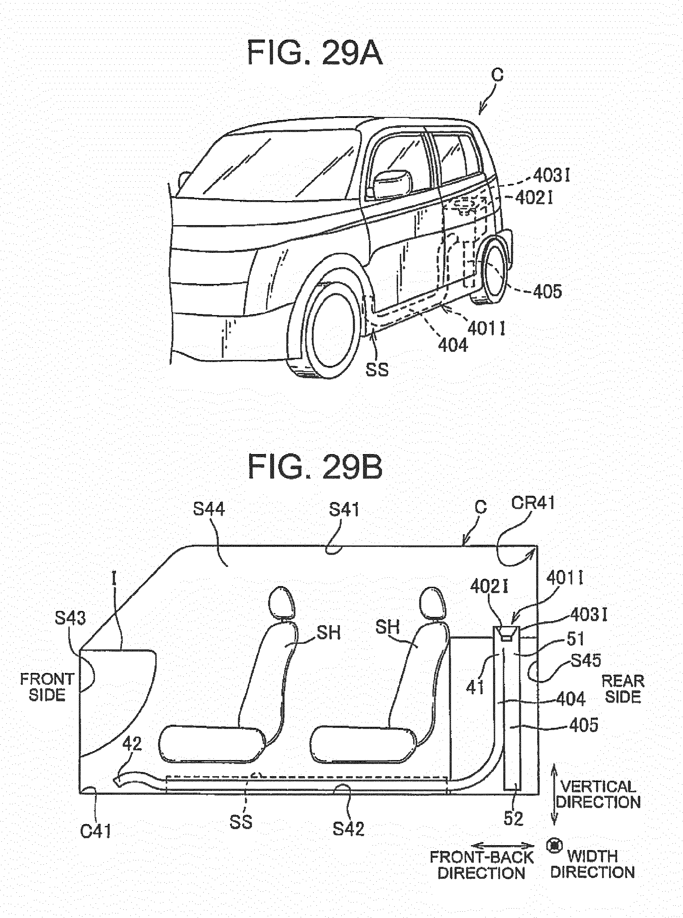

Further, as illustrated as an eighth modification in FIG 29, a speaker system for a mobile object 1I may be a speaker system such that a speaker unit 402I for reproduction of the low sound and an enclosure 403I are provided in the rear side in the travelling direction of the vehicle C, and also, are provided in the vicinity of an intersection part CR1 where the upper surface S41 and the rear surface S5 of the vehicle C intersect, and the acoustic tube 404 extends toward the corner C41 in the front side passing through the inner side of the side sill SS of the vehicle C. The enclosure 403I is provided in the rear of a headrest of the seat SH in the central part in the width direction and in the rear side, the speaker unit 402I is accommodated therein with its front surface facing upward, and thus connecting the one end 41 of the acoustic tube 404 and the one end 51 of the closed tubular member 405 to the lower surface of the enclosure 403I. The acoustic tube 404 extends from the lower surface of the speaker unit 402I toward the lower part and one of the sides of the vehicle C, and extend toward the front side, passing through the inner side of the side sill SS which extends in the front-back direction at a lower part of the door body of the vehicle C. Further, the acoustic tube 404 heads to the higher side once and then heads to the lower side at the more front side than the side sill SS, thereby opening the other end 42 toward the corner C41. Further, the closed tubular member 405 extends toward the lower side.

The sound wave emitted from the speaker unit 402I heads to the intersection part CR1, and the sound wave emitted from the other end of the acoustic tube 404 heads to the corner C41. Note that it may also be configured such that the enclosure is provided either in the left or the right in the width direction, and that the sound wave emitted from the speaker unit heads to a corner where the upper surface S41, the side S44, and the rear side S5 intersect. Further, the other end 42 of the acoustic tube 404 may open toward an intersection part in the more front side than the side sill SS, also may open toward the an intersection part where the front surface S43 and the lower surface S42 intersect, or may also be facing toward the an intersection part where a portion in the more front side than the side sill SS on the side S44 and the lower surface S42 intersect.

According to this kind of speaker system for the mobile object 1I in the eighth modification, the low sound is reflected by the corner or the intersection part in the front and the rear and it is possible to improve the acoustic characteristics of the sound pressure of the low sound range or the like even more.

Further, the length of the closed tubular member is set approximately half of that of the acoustic tube such that a frequency fo of fundamental vibration in the acoustic tube and the frequency fc of the fundamental vibration in the closed tubular member are about the same, and that the maximum value and the minimum value of each synthetic acoustic impedance overlap at the frequency 2fo (2fc) in the aforementioned example, but the length of the acoustic tube and that of the closed tubular member may be set appropriately. For example, the length of the acoustic tube and the length of the closed tubular member may be set in order to make the frequency fo of the fundamental vibration in the acoustic tube and the frequency fc of the fundamental vibration in the closed tubular member somewhat different. When the frequency fc of the fundamental vibration in the closed tubular member is 0.75 times larger than, and 1.25 times smaller than the frequency fo in the acoustic tube, it is possible to inhibit the sound pressure from decreasing at a specific frequency.

Further, the frequency fo in the acoustic tube and the frequency fc of the fundamental vibration in the closed tubular member may be set in order to inhibit a decrease of the sound pressure caused by the other frequency at which the acoustic impedance of the acoustic tube becomes maximum. Further, the frequency fo and the frequency fc may be set in order to inhibit the increase of the sound pressure caused by that the acoustic impedance of the acoustic tube becomes minimum.

Further, as viewed from above in the Example, the other end 42 of the acoustic tube 404 opens toward the corner C41 where the front surface S43, the lower surface S42, and the side S44 in a driver's seat side intersect, but, the other end may open toward a corner where arbitrary three of a plurality of surfaces surrounding the room space of the vehicle A1 (an inner surface of a windshield W, the upper surface S41, the lower surface S42, the front surface S43, and a pair of the sides S44 and the rear surface). Further, the other end of the acoustic tube may open facing an intersection part where two of the plurality of these surfaces intersect (R4 to R48 illustrated in FIG 19), may open being opposed to one surface, or may be along the surface.

Note that the corner C41 is a corner where the front surface S43, the lower surface S42, and the side S44 of the vehicle C intersect, the corner C42 is a corner where the rear surface S5, the lower surface S42, and the side S44 of the vehicle C intersect, and a corner C3 is a corner where the rear surface S5, the upper surface S41, and the side S44 of the vehicle C intersect. Further, an intersection part R41 is an intersection part where the front surface S43, the lower surface S42 of the vehicle C intersect, an intersection part R42 is an intersection part where the lower surface S42 and the side S44 of the vehicle C intersect, an intersection part R43 is an intersection part where the front surface S43 and the side S44 of the vehicle C intersect, an intersection part R44 is an intersection part where the rear surface S5 and the lower surface S42 of the vehicle C intersect, an intersection part R45 is an intersection part where the rear surface S5 and the side S44 of the vehicle C intersect, an intersection part R46 is an intersection part where the front surface S43 and the upper surface S41 of the vehicle C intersect, an intersection part R47 is an intersection part where the upper surface S41 and the side S44 of the vehicle C intersect, and an intersection part R48 is an intersection part where the rear surface S5 and the upper surface S41 of the vehicle C intersect.
2B speaker unit
3B enclosure (accommodating unit)
4B acoustic tube
11 vehicle body
21A speaker unit
22A speaker unit
31A enclosure (accommodating unit)
32A enclosure (accommodating unit)
41A acoustic tube
41A1 tubular member (second tubular member)
41A2 tubular member (third tubular member)
42A acoustic tube
42A1 tubular member (second tubular member)
42A2 tubular member (third tubular member)
C vehicle (mobile object)
C1 corner
F frame
P1 to P3 pillar (frame, first tubular member)
S1 front surface (surface)
S2 upper surface (top surface) (surface)
S3 lower surface (bottom surface) (surface)
S4 side (surface)
S5 rear surface (surface)
SS side sill (frame, first tubular member)
1C speaker system for mobile object
10A to 10D speaker device
302A to 302D speaker unit
303A to 303D enclosure (accommodating unit)
304Ato 304D acoustic tube
41 one end
42 other end
C31 corner
A1 room space of vehicle (space)
S31 upper surface
S32 lower surface
S33 front surface
S34 side
I instrument panel
CR1 to CR4 corner
SH1 driver's seat (front seat)
SH2 passenger seat (front seat)
SH3 back seat
H1 to H5 head position
C31 corner (front side intersection part)
C32 corner (rear side intersection part)
1D to 1H speaker system for mobile object
402A to 402D speaker unit
403A to 403D enclosure (accommodating unit)
404A to 404D tubular member
41 one end
42 other end
C41 corner
S41 upper surface
S42 lower surface
S43 front surface
S44 side
I instrument panel
CR41 to CR44 corner
C41 corner (front side intersection part)
C42 corner (rear side intersection part)

## Claims

1. A vehicle body (11) comprising a speaker system, the speaker system comprising:
a speaker unit (21A) emitting sound from a front side toward a box-shaped space (A1) formed by the vehicle body (11);
an accommodating unit (31A) accommodating a back side of the speaker unit (21A); and
an acoustic tube (41A) having one end connected to an internal space of the accommodating unit (31A) and another end thereof being opened in the box-shaped space (A1),
wherein at least a portion of the acoustic tube (41A) includes a first tubular member (P1), **characterized in that** the first tubular member (P1) is formed of a pillar of the vehicle body (11), and
wherein the another end of the acoustic tube (41A) is placed in a location closer to a bottom surface (S3) surrounding the box-shaped space (A1) than to the speaker unit (21A).

2. Vehicle body (11) according to claim 1,
wherein the another end of the acoustic tube (41A) opens toward an intersection part (R1) where at least two of a plurality of surfaces (S1, S3, S4, S5) surrounding the box-shaped space (A1) intersect.

3. Vehicle body (11) according to claim 1,
wherein the another end of the acoustic tube (41A) opens toward an corner where at least three of a plurality of surfaces (S1, S3, S4, S5) surrounding the box-shaped space (A1) intersect.

4. Vehicle body (11) according to one of the preceding claims,
wherein the acoustic tube (41A) includes a second tubular member (41A1) one end of which is connected to the first tubular member (P1) and another end of which becomes the another end of the acoustic tube (41A).

5. Vehicle body (11) according to one of the preceding claims,
wherein the acoustic tube (41A) includes a third tubular member (41A2) one end of which is connected to an internal space of the accommodating unit (31A) and another end of which is connected to the first tubular member (P1).

6. Vehicle body (11) according to one of the preceding claims, further comprising
at least two speaker devices (10A-D) having the speaker unit (302A-D), the accommodating unit (303A-D), and the acoustic tube (304A-D),
wherein the two speaker devices (10A-D) are placed at respective corners (C1-4) of a front side and a rear side in a travelling direction, or of one side and another side in a width direction of the vehicle body (11) in the box-shaped space (A1).

7. Vehicle body (11) according to claim 6,
wherein the speaker unit (302A,B) of the speaker device (10A,B) placed in the front side and the speaker unit (302C,D) of the speaker device (10C,D) placed in the rear side are operated with a predetermined time difference.

8. Vehicle body (11) according to claim 7,
wherein the another end (42) of the acoustic tube (304A,B) of the speaker device (10A,B) placed in the front side opens toward the intersection part (C31) in the front side where at least two of a plurality of surfaces (S1-5) surrounding the space (A1) intersect,
wherein the another end (42) of the acoustic tube (304C,D) of the speaker device (10C,D) placed in the rear side opens toward an intersection part (C32) in the rear side where at least other two of the plurality of surfaces (S1-5) intersect, and
wherein a wavelength of a standing wave formed by a sound wave emitted from the another end (42) of the acoustic tube (304A-D) in the front side and the rear side is the same as an interval of the intersection part (C31) in the front side and the intersection part (C32) in the rear side.

9. Vehicle body (11) according to claim 6,
wherein the acoustic tube (304C,D) of the speaker device (10C,D) placed in the rear side and the one side extends from the accommodating unit (303C,D) toward the other side, and
wherein the acoustic tube (304C,D) of the speaker device (10C,D) placed in the rear side and the another side extends from the accommodating unit (303C,D) to the one side.

10. Vehicle body (11) according to one of the preceding claims, further comprising
at least one closed tubular member (405) having one end (51) connected to the inner space of the accommodating unit (403I) and also the another end (52) closed.

11. Vehicle body (11) according to claim 10,
wherein the acoustic tube (404) is longer than the closed tubular member (405).

12. Vehicle body (11) according to claim 11,
wherein lengths of the acoustic tube (404) and the closed tubular member (405) are set so that a frequency of fundamental vibration in the closed tubular member (405) becomes 0.75 times bigger than, and 1.25 times smaller than that of the fundamental vibration in the acoustic tube (404).

13. Vehicle body (11) according to claim 11,
wherein the length of the acoustic tube (404) and that of the closed tubular member (405) are set so that the frequency of the fundamental vibration in the acoustic tube (404) and the frequency of the fundamental vibration in the closed tubular member (405) become the same.

14. A vehicle (C) comprising the vehicle body (11) according to one of the preceding claims.

## Patentansprüche

1. Fahrzeugkarosserie (11), die ein Lautsprechersystem umfasst, wobei das Lautsprechersystem umfasst:
eine Lautsprechereinheit (21A), die einen Klang von einer vorderen Seite zu einem durch die Fahrzeugkarosserie (11) gebildeten kastenförmigen Raum (A1) emittiert,
eine Aufnahmeeinheit (31A), die eine hintere Seite der Lautsprechereinheit (21A) aufnimmt, und
ein akustisches Rohr (41A), dessen eines Ende mit einem Innenraum der Aufnahmeeinheit (31A) verbunden ist und dessen anderes Ende sich in dem kastenförmigen Raum (A1) öffnet,
wobei wenigstens ein Teil des akustischen Rohrs (41A) ein erstes Rohrglied (P1) umfasst, **dadurch gekennzeichnet, dass** das erste Rohrglied (P1) durch eine Säule der Fahrzeugkarosserie (11) gebildet wird, und
wobei das andere Ende des akustischen Rohrs (41A) an einer Position näher an einer unteren Fläche (S3), die den kastenförmigen Raum (A1) umgibt, als an der Lautsprechereinheit (21A) angeordnet ist.

2. Fahrzeugkarosserie (11) nach Anspruch 1,
wobei sich das andere Ende des akustischen Rohrs (41A) zu einem Kreuzungsteil (R1) öffnet, wo wenigstens zwei aus einer Vielzahl von Flächen (S1, S2, S4, S5), die den kastenförmigen Raum (A1) umgeben, einander kreuzen.

3. Fahrzeugkarosserie (11) nach Anspruch 1,
wobei sich das andere Ende des akustischen Rohrs (41A) zu einer Ecke öffnet, wo wenigstens drei aus einer Vielzahl von Flächen (S1, S3, S4, S5), die den kastenförmigen Raum (A1) umgeben, einander kreuzen.

4. Fahrzeugkarosserie (11) nach einem der vorstehenden Ansprüche,
wobei das akustische Rohr (41A) ein zweites Rohrglied (41A1) umfasst, dessen eines Ende mit dem ersten Rohrglied (P1) verbunden ist und dessen anderes Ende das andere Ende des akustischen Rohrs (41A) wird.

5. Fahrzeugkarosserie (11) nach einem der vorstehenden Ansprüche,
wobei das akustische Rohr (41A) ein drittes Rohrglied (41A2) umfasst, dessen eines Ende mit einem Innenraum der Aufnahmeeinheit (31A) verbunden ist und dessen anderes Ende mit dem ersten Rohrglied (P1) verbunden ist.

6. Fahrzeugkarosserie (11) nach einem der vorstehenden Ansprüche, das weiterhin umfasst:
wenigstens zwei Lautsprechereinrichtungen (10A-D), die jeweils die Lautsprechereinheit (302A-D), die Aufnahmeeinheit (303A-D) und das akustische Rohr (304A-D) umfassen,
wobei die zwei Lautsprechereinrichtungen (10A-D) an entsprechenden Ecken (C1-4) auf einer vorderen Seite und einer hinteren Seite in der Fahrtrichtung oder auf einer Seite und der anderen Seite in einer Breitenrichtung der Fahrzeugkarosserie (11) in dem kastenförmigen Raum (A1) angeordnet sind.

7. Fahrzeugkarosserie (11) nach Anspruch 6,
wobei die Lautsprechereinheit (302A,B) der Lautsprechereinrichtung (10A,B) auf der vorderen Seite und die Lautsprechereinheit (302C,D) der Lautsprechereinrichtung (10C,D) auf der hinteren Seite mit einer vorbestimmten Zeitdifferenz betrieben werden.

8. Fahrzeugkarosserie (11) nach Anspruch 7,
wobei sich das andere Ende (42) des akustischen Rohrs (304A,B) der Lautsprechereinrichtung (10A,B) auf der vorderen Seite zu dem Kreuzungsteil (C31) auf der vorderen Seite öffnet, wo wenigstens zwei aus einer Vielzahl von Flächen (S1-5), die den Raum (A1) umgeben, einander kreuzen,
wobei sich das andere Ende (42) des akustischen Rohrs (304C,D) der Lautsprechereinrichtung (10C,D) auf der hinteren Seite zu einem Kreuzungsteil (C32) auf der hinteren Seite öffnet, wo wenigstens zwei andere aus der Vielzahl von Flächen (S1-5) einander kreuzen, und
wobei die Wellenlänge einer stehenden Welle, die durch eine von dem anderen Ende (42) des akustischen Rohrs (304A-D) auf der vorderen Seite und der hinteren Seite emittierten Klang gebildet wird, gleich dem Abstand zwischen dem Kreuzungsteil (C31) auf der vorderen Seite und dem Kreuzungsteil (C32) auf der hinteren Seite ist.

9. Fahrzeugkarosserie (11) nach Anspruch 6,
wobei sich das akustische Rohr (304C,D) der Lautsprechereinrichtung (10C,D) auf der hinteren Seite und auf der einen Seite von der Aufnahmeeinheit (303C, D) zu der anderen Seite erstreckt, und
wobei sich das akustische Rohr (304C,D) der Lautsprechereinrichtung (10C,D) auf der hinteren Seite und auf der anderen Seite von der Aufnahmeeinheit (303C, D) zu der einen Seite erstreckt.

10. Fahrzeugkarosserie (11) nach einem der vorstehenden Ansprüche, die weiterhin umfasst:
wenigstens ein geschlossenes Rohrglied (405), dessen eines Ende (51) mit dem Innenraum der Aufnahmeeinheit (403I) verbunden ist und dessen anderes Ende (52) geschlossen ist.

11. Fahrzeugkarosserie (11) nach Anspruch 10,
wobei das akustische Rohr (404) länger als das geschlossene Rohrglied (405) ist.

12. Fahrzeugkarosserie (11) nach Anspruch 11,
wobei die Längen des akustischen Rohrs (404) und des geschlossenen Rohrglieds (405) derart gesetzt sind, dass die Frequenz der Grundschwingung in dem geschlossenen Rohrglied (405) 0,75-fach größer und 1,25-fach kleiner als diejenige der Grundschwingung in dem akustischen Rohr (404) wird.

13. Fahrzeugkarosserie (11) nach Anspruch 11,
wobei die Länge des akustischen Rohrs (404) und diejenige des geschlossenen Rohrglieds (405) derart gesetzt sind, dass die Frequenz der Grundschwingung in dem akustischen Rohr (404) und die Frequenz der Grundschwingung in dem geschlossenen Rohrglied (405) gleich werden.

14. Fahrzeug (C), das die Fahrzeugkarosserie (11) gemäß einem der vorstehenden Ansprüche umfasst.

## Revendications

1. Carrosserie de véhicule (11) comprenant un système de haut-parleurs, le système de haut-parleurs comprenant :
une unité de haut-parleur (21A) émettant du son depuis un côté avant vers un espace en forme de boîte (A1) formé par la carrosserie de véhicule (11) ;
une unité de logement (31A) logeant un côté arrière de l'unité de haut-parleur (21A) ; et
un tube acoustique (41A) ayant une extrémité connectée à un espace interne de l'unité de logement (31A) et une autre extrémité ouverte dans l'espace en forme de boîte (A1),
dans laquelle au moins une portion du tube acoustique (41A) comprend un premier élément tubulaire (P1),
**caractérisée en ce que** le premier élément tubulaire (P1) est constitué par un pilier de la carrosserie de véhicule (11), et
dans laquelle ladite autre extrémité du tube acoustique (41A) est placée à un emplacement plus proche d'une surface inférieure (S3) entourant l'espace en forme de boîte (A1) que de l'unité de haut-parleur (21A).

2. Carrosserie de véhicule (11) selon la revendication 1,
dans laquelle ladite autre extrémité du tube acoustique (41A) s'ouvre vers une partie d'intersection (R1) où s'intersectent au moins deux surfaces d'une pluralité de surfaces (S1, S3, S4, S5) entourant l'espace en forme de boîte (A1).

3. Carrosserie de véhicule (11) selon la revendication 1,
dans laquelle ladite autre extrémité du tube acoustique (41A) s'ouvre vers un coin où s'intersectent au moins trois surfaces d'une pluralité de surfaces (S1, S3, S4, S5) entourant l'espace en forme de boîte (A1).

4. Carrosserie de véhicule (11) selon l'une des revendications précédentes,
dans laquelle le tube acoustique (41A) comprend un deuxième élément tubulaire (41A1) dont une extrémité est connectée au premier élément tubulaire (P1) et dont une autre extrémité devient ladite autre extrémité du tube acoustique (41A).

5. Carrosserie de véhicule (11) selon l'une des revendications précédentes,
dans laquelle le tube acoustique (41A) comprend un troisième élément tubulaire (41A2) dont une extrémité est connectée à un espace interne de l'unité de logement (31A) et dont une autre extrémité est connectée au premier élément tubulaire (P1).

6. Carrosserie de véhicule (11) selon l'une des revendications précédentes, comprenant en outre
au moins deux dispositifs de haut-parleur (10A-D) comportant l'unité de haut-parleur (302A-D), l'unité de logement (303A-D) et le tube acoustique (304A-D),
dans laquelle les deux dispositifs de haut-parleur (10A-D) sont placés aux coins respectifs (C1-4) d'un côté avant et d'un côté arrière en direction de déplacement, ou d'un côté et d'un autre côté en direction de la largeur de la carrosserie de véhicule (11) dans l'espace en forme de boîte (A1).

7. Carrosserie de véhicule (11) selon la revendication 6,
dans laquelle l'unité de haut-parleur (302A, B) du dispositif de haut-parleur (10A, B) placé dans le côté avant et l'unité de haut-parleur (302C, D) du dispositif de haut-parleur (10C, D) placé dans le côté arrière sont utilisées avec un décalage temporel prédéterminé.

8. Carrosserie de véhicule (11) selon la revendication 7,
dans laquelle ladite autre extrémité (42) du tube acoustique (304A, B) du dispositif de haut-parleur (10A, B) placé dans le côté avant s'ouvre vers la partie d'intersection (C31) dans le côté avant où s'intersectent au moins deux surfaces d'une pluralité de surfaces (S1-5) entourant l'espace (A1),
dans laquelle ladite autre extrémité (42) du tube acoustique (304C, D) du dispositif de haut-parleur (10C, D) placé dans le côté arrière s'ouvre vers une partie d'intersection (C32) dans le côté arrière où s'intersectent au moins deux autres surfaces de la pluralité de surfaces (S1-5), et
dans laquelle une longueur d'onde d'une onde stationnaire formée par une onde sonore émise par ladite autre extrémité (42) du tube acoustique (304A-D) dans le côté avant et le côté arrière est la même qu'un intervalle de la partie d'intersection (C31) dans le côté avant et la partie d'intersection (C32) dans le côté arrière.

9. Carrosserie de véhicule (11) selon la revendication 6,
dans laquelle le tube acoustique (304C, D) du dispositif de haut-parleur (10C, D) placé dans le côté arrière et ledit un côté s'étend depuis l'unité de logement (303C, D) vers l'autre côté, et
dans laquelle le tube acoustique (304C, D) du dispositif de haut-parleur (10C, D) placé dans le côté arrière et ledit autre côté s'étend depuis l'unité de logement (303C, D) vers ledit un côté.

10. Carrosserie de véhicule (11) selon l'une des revendications précédentes, comprenant en outre
au moins un élément tubulaire fermé (405) ayant une extrémité (51) connectée à l'espace intérieur de l'unité de logement (4031) et également ladite autre extrémité (52) fermée.

11. Carrosserie de véhicule (11) selon la revendication 10,
dans laquelle le tube acoustique (404) est plus long que l'élément tubulaire fermé (405).

12. Carrosserie de véhicule (11) selon la revendication 11,
dans laquelle les longueurs du tube acoustique (404) et de l'élément tubulaire fermé (405) sont configurées de telle sorte que la fréquence de vibration fondamentale dans l'élément tubulaire fermé (405) devient 0,75 fois plus grande et 1,25 fois plus petite que celle de la vibration fondamentale dans le tube acoustique (404).

13. Carrosserie de véhicule (11) selon la revendication 11,
dans laquelle la longueur du tube acoustique (404) et celle de l'élément tubulaire fermé (405) sont configurées de telle sorte que la fréquence de la vibration fondamentale dans le tube acoustique (404) et la fréquence de la vibration fondamentale dans l'élément tubulaire fermé (405) deviennent identiques.

14. Véhicule (C) comprenant la carrosserie de véhicule (11) selon l'une des revendications précédentes.
